# EUROPEAN PATENT SPECIFICATION

(11) **EP 2 704 154 B1**
(45) Date of publication and mention of the grant of the patent: **14.12.2016**
(21) Application number: 12776434.8
(22) Date of filing: 13.03.2012
(51) Int. Cl.: G21F 9/06, G21F 9/12, B01J 20/28, B01J 20/32, B82Y 15/00, H01F 1/00, B82Y 30/00, C02F 1/28, C02F 1/48, H01F 1/44, C02F 101/00, C02F 103/08, C02F 103/00

(54) **MAGNETIC COMPOSITE PARTICLES FOR DECONTAMINATION AND METHOD FOR PRODUCING SAME, AND SYSTEM FOR DECONTAMINATING RADIOACTIVE MATERIALS AND METHOD FOR DECONTAMINATING RADIOACTIVE MATERIALS**
MAGNETISCHE KOMPOSITTEILCHEN FÜR DEKONTAMINATIONEN UND HERSTELLUNGSVERFAHREN DAFÜR SOWIE SYSTEM ZUR DEKONTAMINATION RADIOAKTIVER STOFFE UND VERFAHREN ZUR DEKONTAMINATION RADIOAKTIVER STOFFE
PARTICULES MAGNÉTIQUES COMPOSITES POUR LA DÉCONTAMINATION ET LEUR PROCÉDÉ DE PRODUCTION, AINSI QUE SYSTÈME DE DÉCONTAMINATION DE MATIÈRES RADIOACTIVES ET PROCÉDÉ DE DÉCONTAMINATION CORRESPONDANT

(30) Priority: 28.04.2011 JP 2011101174; 14.10.2011 JP 2011227470; 01.03.2012 JP 2012044995
(43) Date of publication of application: 05.03.2014
(73) Proprietor: The Jikei University, Tokyo 105-8461 (JP)
(72) Inventor: NAMIKI, Yoshihisa, Tokyo 105-8461 (JP)
(74) Representative: CH Kilger Anwaltspartnerschaft mbB
(86) International application number: PCT/JP2012/001744
(87) International publication number: WO 2012/147266

(56) References cited:
- WO-A1-99/47253
- CN-A- 101 231 899
- JP-A- 2002 348 381
- US-A1- 2004 178 141
- US-A1- 2009 120 880
- YOSHITAKA KITAMOTO ET AL.: 'Jisei Nano Ryushi Shusekitai no Cho Rinkaisui Netsu Shori ni yoru Kagogata Kozo Biryushi no Sakusei' ABSTRACTS OF MEETING OF JAPAN SOCIETY OF POWDER AND POWDER METALLURGY, HEISEI 22 NENDO SHUKI TAIKAI 09 November 2010, page 60, XP008171006

## Description

### Technical Field

The present invention relates to a radioactive substance family decontamination system and a radioactive substance family decontamination method. The present invention also relates to a magnetic composite particle for decontamination and a method for fabricating the same, which are suitably used for the radioactive substance family decontamination system and the radioactive substance family decontamination method.

### Background Art

In the accident at Fukushima Daiichi Nuclear Power Station, which was caused by the Great East Japan Earthquake occurred off the Sanriku coast along the Pacific Ocean, high-level radioactive substances-contaminated water is a major barrier to recovery work. For example, radioactive cesium 137 contained in radioactive substances-contaminated water from Fukushima Daiichi Nuclear Power Station has a half-life of 30.1 years, and radioactive strontium-90 has a half-life of 28.9 years. A large amount of radioactive substances-contaminated water exists in Fukushima Daiichi Nuclear Power Station, which is an extremely serious situation. For example, radioactive cesium is accumulated in muscle tissue of fish and animals and the like through the food chain. It is reported that incorporation of radioactive cesium in the body increases the risk of liver cancer, kidney cancer, and bladder cancer.

Under such circumstances, a system has been proposed in which pigment containing ferric ferrocyanide (Prussian blue (Non Patent Literature 1)), which is used as an antidote against radioactive cesium, is injected into radioactive substances-contaminated water and separated by a centrifugal force, and the water is thereafter filtered by a filter to remove the pigment as well as radioactive cesium (Non Patent Literature 2). As a result of an experiment in which pigment containing ferric ferrocyanide is injected into simulated contaminated water (water containing iodine, cesium, and strontium which do not emit radiation of isotopes of radioactive substance corresponding to high-level contaminated water from Fukushima Daiichi Nuclear Power Station) and separated by a centrifugal force, it is reported that the cesium concentration is reduced to one ten-thousandth or less. The use of an existing movable apparatus for purification of mud water, for example, enables treatment of 300 liters of water at maximum per hour.

As another technique, a method has been proposed in which several types of minerals, such as natural zeolite, or chemical substances are injected into radioactive substances-contaminated water to thereby collect radioactive substances (Non Patent Literature 3). More specifically, it is reported that when 1.5 g of powder mixed with several types of minerals, such as natural zeolite, or chemical substances is added to simulated contaminated water, which is obtained by dissolving non-radioactive cesium in 100 mL of water at a concentration of 1 to 10 ppm, and the mixture is stirred for 10 minutes, almost 100% of cesium can be removed.

Non Patent Literature 4 proposes a method using a composite of magnetite and hexacyanoferrate (II) to remove radioactive substances. Non Patent Literature 5 proposes, as a separation method for decontamination of a radioactive waste liquid, a method using a composite of a calixarene-crown-6 derivative having a carboxyl group at its terminal and a magnetic ferritin molecule of the nanosize. Non Patent Literatures 6 and 7 propose a method using a composite of magnetite and hexacyanoferrate (II) to detect peroxidases.

Patent Literature 4 discloses magnetic composite nanoparticles for the decontamination of industrial waste water. Note that Patent Literatures 1 to 3, and Non Patent Literatures 8 and 9 will be described later.

### Citation List

### Patent Literature

[Patent Literature 1] Japanese Patent No. 4183047
[Patent Literature 2] Japanese Patent Application No. 2011-083367
[Patent Literature 3] PCT/JP2011/000638
[Patent Literature 4] CN 101231899

### Non Patent Literature

[Non Patent Literature 1] "Product Information Pigment", [online], Dainichiseika Color & Chemicals Mfg. Co., Ltd., [retrieved on October 11, 2011], Internet (http://www.dai color.co.jp/products_i/pro_i_pig/miloriblueqa.html)
[Non Patent Literature 2] "Radioactive Substance: Tokyo Institute of Technology has developed cesium-contaminated water purification using pigment", [online], The Mainichi Shimbun, April 15, 2011, [retrieved on April 22, 2011], Internet (http://mainichi.jp/select/weathemews/news/20110415k0000e040015000c.html)
[Non Patent Literature 3] "Professors of Kanazawa University have developed powder for trapping radioactive substances and also for purifying contaminated water", [online], Sankei News, April 19, 2011, [retrieved on April 22, 2011], Internet (http://sankei.jp.msn.com/science/news/110419/scn11041909150001-n1.htm)
[Non Patent Literature 4] R.D. Ambashta, et al., Journal of Magnetic Materials, 2003, 267, 335-340
[Non Patent Literature 5] Urban I, et al., Chem. Commun., 2010, 46, 4583-4585
[Non Patent Literature 6] Zhang XQ, et al., J. Mater. Chem., 2010, 20, 5110-5116
[Non Patent Literature 7] Wang H, et al., J. Hazard. Mater., 2011, 191, 163-169
[Non Patent Literature 8] "Analysis of non-destructive morphology of iodine contained in paddy soil by use of XANES, and its leaching mechanism', [online], Study Topics, National Institute for Agro-Environmental Sciences, [retrieved on October 11, 2011], Internet (http://www.niaes.affrc.go.jp/sinfo/publish/niaesnews/072/news07209.pdf#search=)
[Non Patent Literature 9] Yoshihisa Namiki, et al., Nature Nanotechnology 4, 598-606 (2009)

### Summary of Invention

### Technical Problem

The method disclosed in Non Patent Literature 2 described above employs the system in which contaminated water is separated by a centrifugal force and is thereafter filtered by a filter to remove pigment as well as radioactive cesium. Further, as described above, the use of an existing movable apparatus for purification of mud water, for example, enables treatment of 300 liters of water at maximum per hour.

According to Non Patent Literatures 4 to 7 described above, since radioactive substances are collected by a magnetic force, the radioactive substances can be effectively collected. However, according to the method disclosed in Non Patent Literature 5, the manufacturing cost of the composite itself is high, which poses a problem that the method is not suitable for treatment of a large amount of seawater and the like. Also in Non Patent Literatures 4, 6, and 7, it cannot be said that the environmental tolerance of magnetic composite particles is sufficient.

If it is possible to provide a technique for decontaminating radioactive substances with higher efficiency, a great contribution to more efficient recovery work after the accident at Fukushima Daiichi Nuclear Power Station and to solving the problem of radiation exposure can be expected. It is also expected that the technique plays an important role as a measure for safety of nuclear power plants currently in operation. While the problems inherent in radioactive substances-contaminated water from nuclear power plant have been described above, there are similar problems in the overall field of treatment for decontaminating a radioactive substance family contained in a liquid.

The present invention has been made in view of the above circumstances. A first object of the present invention is to provide a radioactive substance family decontamination system and a radioactive substance family decontamination method which are capable of decontaminating a radioactive substance family with high efficiency, have a high environmental tolerance, and are suitable for mass disposal. A second object of the present invention is to provide a magnetic composite particle for decontamination which is suitably used for the radioactive substance family decontamination system and the radioactive substance family decontamination method, and a method for fabricating the same.

### Solution to Problem

A radioactive substance family decontamination system according to the present invention includes: a magnetic composite particle for decontamination (1) adapted to trap a radioactive substance (21) in a liquid (20); and magnetic accumulation means (30) for accumulating the magnetic composite particle for decontamination (1) in the liquid (20), wherein the magnetic composite particle for decontamination (1) has a multilayer structure including: a magnetic particle (10) formed in a core portion; a trapping compound (18) formed in a surface layer to trap the radioactive substance (21) in the liquid (20); and an intermediate layer (15) that directly covers the magnetic particle (10) and is formed substantially between the magnetic particle (10) and the trapping compound (18), wherein the trapping compound and the intermediate layer are bonded together by an electrostatic bond, and wherein the magnetic particle (10) has an average grain size of 1 nm to 10 mm.

According to the method disclosed in Non Patent Literature 1 described above, the separation by a centrifugal force is required as a method for collecting particles having trapped a radioactive substance family. Accordingly, a centrifugal separation apparatus is required and it takes more time for centrifugal separation, which inhibits efficient collection of a radioactive substance family from a large amount of radioactive substances-contaminated water. As the method for collecting particles having trapped a radioactive substance family, a method for causing precipitation or causing precipitation by adding a flocculant requires facilities and time for precipitation, which inhibits effective collection of a radioactive substance family from a large amount of radioactive substances-contaminated water.

On the other hand, the radioactive substance family decontamination system according to the present invention enables a magnetic composite particle for decontamination to trap a radioactive substance family and allows magnetic accumulation means to collect the radioactive substance family, thereby making it possible to collect the radioactive substance family with high efficiency. The magnetic composite particle for decontamination includes an intermediate layer formed between a magnetic nanoparticle and a trapping compound, which enhances the environmental tolerance. The system is also suitable for mass disposal.

A method for fabricating a magnetic composite particle for decontamination according to the present invention is defined in claim 12.

### Advantageous Effects of Invention

The present invention has an advantageous effect that it is possible to provide a radioactive substance family decontamination system and a radioactive substance family decontamination method which are capable of decontaminating a radioactive substance family with high efficiency, having a high environmental tolerance, and are suitable for mass disposal. The present invention has another advantageous effect that it is possible to provide a magnetic composite particle for decontamination which is suitably used for the radioactive substance family decontamination system and radioactive substance family decontamination method, and a method for fabricating the same.

### Brief Description of Drawings

Fig. 1 is a flowchart showing a radioactive substance family decontamination method according to a first embodiment;
Fig. 2A is a schematic explanatory diagram of a magnetic composite particle for decontamination according to the first embodiment;
Fig. 2B is a partial exploded view of the magnetic composite particle for decontamination according to the first embodiment;
Fig. 2C is a sectional view showing a cut portion taken along the line IIC-IIC of Fig. 2A;
Fig. 2D is an explanatory diagram showing an example of a case where magnetic nanoparticles form a cluster;
Fig. 2E is an explanatory diagram showing an example of a case where an intermediate layer is formed on the cluster shown in Fig. 2D;
Fig. 2F is an explanatory diagram showing an example of a process in which trapping compounds are formed in Fig. 2E;
Fig. 2G is an explanatory diagram showing an example of magnetic composite particles for decontamination which form a cluster;
Fig. 2H is an explanatory diagram showing another example of a coated magnetic nanoparticle which forms a cluster;
Fig. 2I is a schematic sectional view of a cut portion of Fig. 2H;
Figs. 3A to 3D are explanatory diagrams each showing a radioactive substance family decontamination system according to the first embodiment;
Fig. 4 is a schematic exploded perspective view showing an example of magnetic accumulation means according to the first embodiment;
Figs. 5A and 5B are schematic explanatory diagrams for explaining an example of a radioactive substance family decontamination method according to a second embodiment;
Fig. 6A is a schematic top view showing an example of a magnetic wire mesh according to the second embodiment;
Fig. 6B is a schematic side view of a magnetic filter according to the second embodiment;
Figs. 7A and 7B are schematic explanatory diagrams for explaining an example of a radioactive substance family decontamination method according to a third embodiment;
Fig. 8A is a conceptual diagram showing an example of a magnetic nanoparticle according to a fourth embodiment;
Fig. 8B is a schematic perspective view taken along the line VIIIB-VIIIIB of Fig. 8A;
Figs. 9A to 9H are photographs each showing an accumulation state of magnetic composite particles for decontamination according to Example 1 by magnetic accumulation means;
Figs. 10A to 10D are explanatory diagrams each showing an accumulation state of magnetic composite particles for decontamination according to Example 2 by magnetic accumulation means;
Fig. 11 is a graph in which the cesium concentration of each sample according to Example 2 is plotted;
Fig. 12 is a graph in which the cesium concentration of each sample according to Example 3 is plotted;
Fig. 13 is a graph in which the cesium concentration of each sample according to Example 4 is plotted;
Fig. 14A is a schematic front view of a magnetism exposure device and a sample according to Example 6;
Fig. 14B is a schematic top view showing the magnetism exposure device and the sample according to Example 6;
Figs. 15A to 15E are explanatory diagrams for synthesizing magnetic composite particles for decontamination by using a mixing/stirring device according to a first modified example;
Figs. 16A to 16D are explanatory diagrams for synthesizing magnetic composite particles for decontamination by using a mixing/stirring device according to a second modified example;
Fig. 17A is a schematic diagram for explaining a magnet filter/syringe according to

### Example 219; and

Fig. 17B is a schematic exploded view for explaining the magnet filter/syringe according to Example 219.

### Description of Embodiments

Hereinafter, embodiments to which the present invention is applied are exemplified. Needless to say, other embodiments can also be included in the category of the present invention as long as the embodiments are within the scope of the present invention. The size and ratio of each member illustrated in the following drawings are only for convenience of explanation, and are not necessarily the same as the actual size and ratio. In the following embodiments and examples, the same constituent members are denoted by the same reference numerals, and the description thereof is omitted as appropriate. The following embodiments may be combined as desirable.

### [First Embodiment]

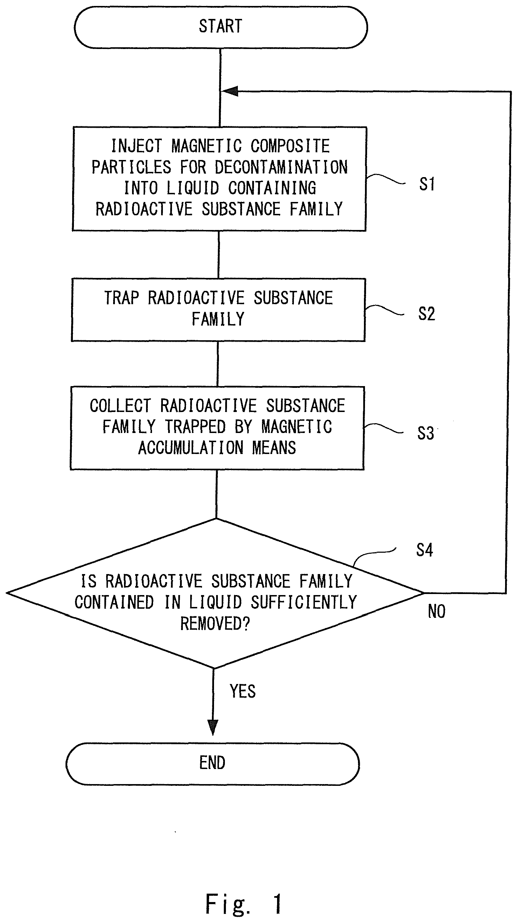

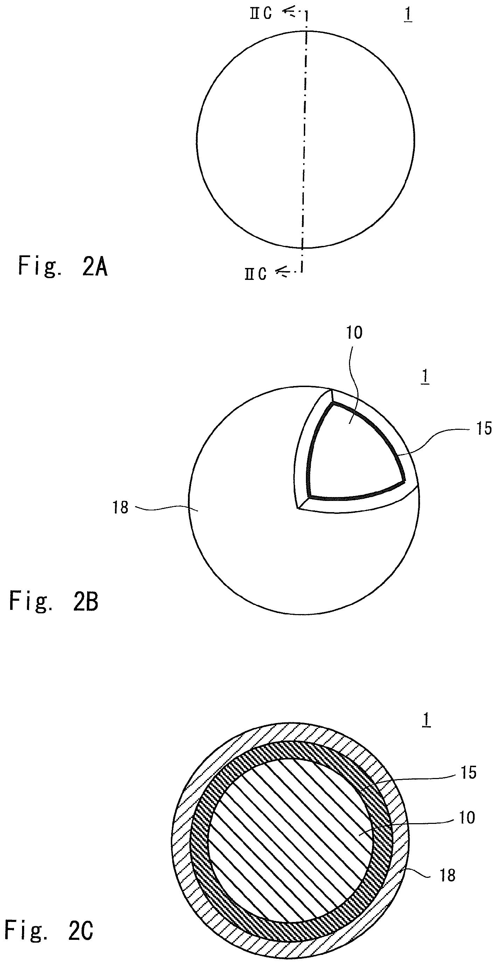

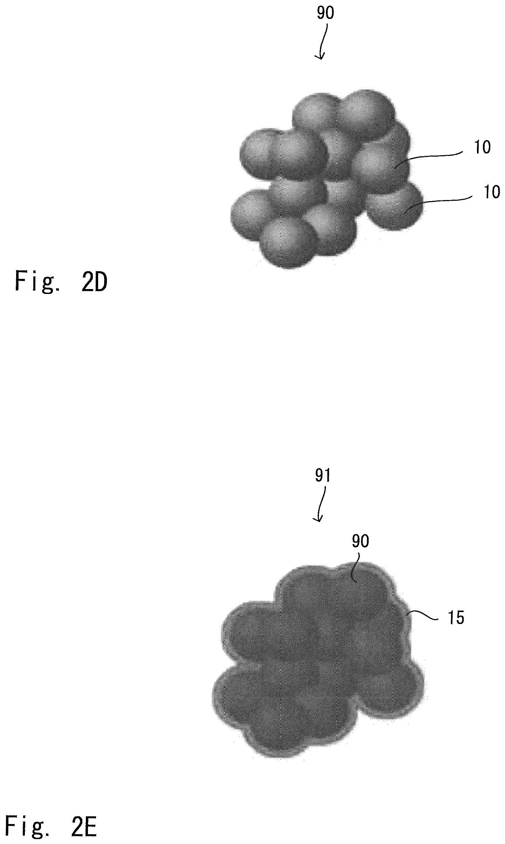

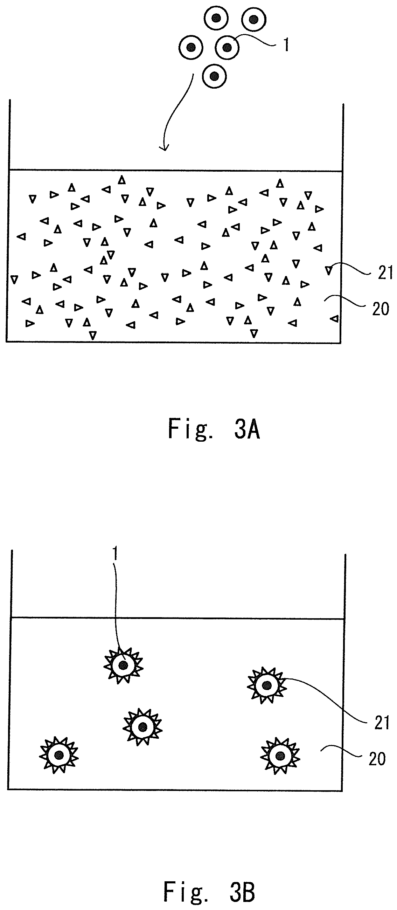

A radioactive substance family decontamination system according to the present invention will be described with reference to Figs. 1 to 3D. Fig. 1 is a flowchart showing a radioactive substance family decontamination method according to a first embodiment. Fig. 2A is a schematic explanatory diagram showing a magnetic composite particle for decontamination according to the first embodiment. Fig. 2B is a partial exploded view of the magnetic composite particle for decontamination. Fig. 2C is a sectional view of a cut portion taken along the line IIC-IIC of Fig. 2A. Figs. 2D to 2I are explanatory diagrams and the like each showing a case where magnetic nanoparticles of magnetic composite particles for decontamination form a cluster. Figs. 3A to 3D are explanatory diagrams each showing a radioactive substance family decontamination system according to the first embodiment.

Note that the term "radioactive substance" is a general term for substances with radioactivity, and refers to nuclear fuel materials, such as uranium, plutonium, and thorium, radioactive elements, radioactive isotopes, or activation products in general which are generated by absorption or nuclear reaction of neutrons. A radioactive substance family decontamination system and a radioactive substance family decontamination method according to the present invention can be applied not only to radioactive substances, but also to stable isotopes of the radioactive isotopes which are radioactive substances. It is generally known that radioactive isotopes and stable isotopes have the same physico-chemical properties and the same behavior in an environment (For example, Non Patent Literature 8). In other words, as generally known, it can be considered that radioactive isotopes and stable isotopes have substantially the same trapping behavior. Accordingly, the term "radioactive substance family" herein described is defined as including nuclear fuel materials, such as uranium, plutonium, and thorium, radioactive elements, radioactive isotopes, activation products in general which are generated by absorption or nuclear reaction of neutrons, and stable isotopes (non-radioactive substances) of radioactive isotopes.

The present invention provides a method for injecting magnetic composite particles for decontamination into a liquid containing a radioactive substance family, and collecting the radioactive substance family contained in the liquid. The liquid to be collected according to the present invention, that is, the liquid containing the radioactive substance family, is not particularly limited within the scope of the present invention. Suitable examples of the liquid include an aqueous liquid such as radioactive substances-contaminated water, and an aqueous solvent partially containing an organic solvent. An organic solvent is also applicable. Examples of the liquid to be collected according to the present invention include rainwater, underground water, snow water, seawater, river water, lake water, pond water, water from a water storage tank and the like, soil water containing contaminated soil, contaminated dust dispersed water, contaminated dirt dispersed water, washing water for washing contaminated rubble, apparatus, machine, and the like, water used to wash transport means for transporting a human, an animal, or luggage, such as a tricycle, a bicycle, a motor bicycle, am automobile, an electric car, a freight car, a ship, an aircraft, and a helicopter, water supplied to a water supply, water supplied to a gray water system, water collected from sewerage, sludge, pure water sludge, dispersed water of burned ash containing a radioactive substance family, drinking water including food, such as milk, fruit juice, and tea, washing water for picked tea leaves, breast milk, blood serum and body fluid of a person suffering from internal exposure to radiation, other animal-derived, plant-derived, and microbially-derived water, contaminated water, and washing water. Examples of water supplied to a public water supply and a gray water system include water supplied to every home, industrial water, agricultural water, and water used for forestry, livestock industry, and fisheries industry.

In the first embodiment, a waste liquid containing radioactive cesium, which is one of problems caused by an accident at a nuclear power plant, will be described as an example of the radioactive substance family. Radioactive cesium is one of substances generated during nuclear fission of uranium which is used as a fuel in a nuclear power plant. It is known that radioactive cesium is a substance which has chemical properties similar to those of potassium and is incorporated and distributed in animals and plans in the same way as potassium.

First, magnetic composite particles for decontamination 1 that trap a radioactive substance family are injected into radioactive substances-contaminated water 20 which is a liquid containing a radioactive substance family (see Step 1 in Fig. 3A). In the example of the first embodiment, particles that trap radioactive cesium 21, which is a radioactive substance family, are injected into the radioactive substances-contaminated water 20. The magnetic composite particles for decontamination 1 are particles having a radioactive substance family trapping property and magnetism. An addition of the magnetic composite particles for decontamination 1 sufficient for trapping the radioactive cesium 21 is calculated by measuring the concentration of the radioactive substance family contained in the radioactive substances-contaminated water 20, and the calculated addition of the magnetic composite particles for decontamination is injected. In the case of eliminating a plurality of radioactive substances, such as radioactive strontium and radioactive thallium, at the same time, a plurality of types of magnetic composite particles for decontamination including trapping compounds that trap radioactive substances to be decontaminated may be injected into radioactive substances-contaminated water at the same time or in a plurality of injections.

As shown in Figs. 2A to 2C, the magnetic composite particle for decontamination 1 includes a magnetic nanoparticle 10, an intermediate layer 15, and a trapping compound 18. The intermediate layer 15 is formed in at least a part of the surface of the magnetic nanoparticle 10, and the magnetic nanoparticle 10 and the trapping compound 18 are bound together through the intermediate layer 15. In other words, the magnetic composite particle for decontamination 1 includes: the magnetic nanoparticle 10 formed in a core portion; the trapping compound 18 formed in a surface layer to trap a radioactive substance family contained in a liquid; and the intermediate layer 15 that directly covers the magnetic nanoparticle 10 and is formed substantially between the magnetic nanoparticle 10 and the trapping compound 18. The intermediate layer 15 may be composed of a single intermediate layer, or may be composed of a plurality of intermediate layers may be formed.

The magnetic nanoparticle 10 is not particularly limited, and any magnetic nanoparticle can be applied as long as the magnetic nanoparticle satisfies the conditions that: (1) the magnetic nanoparticle 10 and the trapping compound 18 form the magnetic composite particle for decontamination 1; and (2) the magnetic nanoparticle 10 has magnetism which can be accumulated by magnetic accumulation means. Suitable examples of the magnetic nanoparticle 10 include ferrum (Fe), nickel, cobalt, manganese, gadolinium, and oxides thereof, magnetite (Fe₃O₄), maghemite (Fe₂O₃), iron monoxide (FeO), iron nitride, a cobalt-platinum-chrome alloy, a barium-ferrite alloy, a manganese-aluminum alloy, an iron-platinum alloy, an iron-palladium alloy, a cobalt-platinum alloy, an iron-neodymium-boron alloy, and a samarium-cobalt alloy. Magnetic toner which is used for copiers and the like may also be used, for example. To improve the corrosion resistance of the surface of each magnetic nanoparticle, the surface may be coated with various metal oxides.

The magnetic nanoparticle 10 is preferably formed of a material having a high magnetic anisotropy and a high magnetic induction characteristic even when the particle diameter is small. Preferred examples of the material of the magnetic nanoparticle 10 include magnetic composite particles for decontamination including iron nitride, ferrum, or FePt particles and nanoparticles including FePt particles and other magnetic metal elements. Alternatively, nanoparticles or microparticles having magnetic molecules coated with non-magnetic molecules may be used. More alternatively, self-associated magnetic lipid nanoparticles disclosed in Patent Literature 2 described above, or organic material coated magnetic nanoparticles such as lipid coated magnetic nanoparticles or polymer coated magnetic nanoparticles may be used as the magnetic nanoparticle. In addition, inorganic substance coated magnetic nanoparticles such as silica coated magnetic nanoparticles may be used as the magnetic nanoparticle.

The average grain size of the magnetic nanoparticle 10 is not particularly limited as long as the magnetic nanoparticle can be dispersed in the radioactive substances-contaminated water 20. In view of the dispersion property with respect to the radioactive substances-contaminated water 20, the average grain size is preferably 1 nm to 10 mm. More preferably, the average grain size is 5 nm or more in terms of the magnetic accumulation ability, and is 1 mm or less in terms of the enlargement of the accumulation surface area.

The trapping compound 18 is not limited as long as the trapping compound can trap the radioactive substance family, and any known trapping compound can be used depending on the radioactive substance to be trapped. Examples of the trapping compound 18 include metal ferrocyanide. In addition, the overall clay minerals, such as zeolite, illite, mica, vermiculite, and smectite, activated carbon, the overall ion exchangers, publicly-known natural/artificial nanoporous bodies, and dietary fiber such as pectin are effective. Specific suitable examples of metal ferrocyanide include metal ferrocyanide such as ferric ferrocyanide (Prussian blue), nickel ferrocyanide, cobalt ferrocyanide, copper ferrocyanide, zinc ferrocyanide, chromium ferrocyanide, and manganese ferrocyanide. Examples of ion exchangers include ion-exchange resin, natural ion exchangers such as vermiculite and bentonite, and inorganic ion exchangers such as zirconium phosphate, aluminum oxide, and ferric ferrocyanide. When cesium is illustrated as the radioactive substance family, ferric ferrocyanide, nickel ferrocyanide, cobalt ferrocyanide, zeolite, clay mineral, and pectin (dietary fiber) are especially effective. When strontium is contained as the radioactive substance family, hydroxyapatite or the like is especially effective. Additionally, guar bean enzyme resolvent, agarose, glucomannan, polydextrose, alginate sodium, inulin, carrageenan, cellulose, hemicellulose, lignin, chitin, and chitosan are also effective. Prussian blue is effectively used to remove not only cesium but also thallium, for example. The trapping compound may be designed as appropriate depending on the radioactive substance to be trapped. The trapping compound may be subjected to treatment, such as heat treatment or pressure-heat treatment, as needed. For example, the cesium adsorption ability of zeolite or the like can be improved by heat treatment or pressure-heat treatment. In the case of trapping a plurality of types of radioactive substances, different types of trapping compounds may be introduced into a coated magnetic nanoparticle, or a plurality of magnetic composite particles for decontamination may be used.

The intermediate layer 15 functions as an intermediate layer for magnetic nanoparticles formed in a core portion. The intermediate layer 15 is formed substantially between the magnetic nanoparticle 10 and the trapping compound 18, and functions to allow them to adhere to each other. As the coated magnetic nanoparticle including the magnetic nanoparticle 10 and the intermediate layer 15, commercially-available magnetic beads, for example, are suitably used. The bond form between the magnetic nanoparticle 10 and the intermediate layer 15 is not limited, and any publicly-known techniques can be used. Examples of the bond-form include a chemical bond (intramolecular bond) constituting an internal structure of a molecule (metal), a covalent bond (nonmetal-nonmetal), a coordinate bond, a metal-metal bond, a chemical bond constituting a molecular (atomic) group, an ion bond (nonmetal-metal), a metallic bond, a hydrogen bond, a hydrophobic bond, a van der Waals bond, and, in a narrow sense, an intermolecular force. In terms of the bond strength, a covalent bond or an electrostatic bond is desirable. For example, the use of polymerelectrolyte facilitates coating of magnetic nanoparticles.

According to the invention, the bond form between the intermediate layer 15 and the trapping compound 18 is an electrostatic bond. The intermediate layer 15 preferably has a reaction group to be bonded with the trapping compound 18. In Non Patent Literature 4, a layer corresponding to the intermediate layer 15 is not provided, which poses a problem that the composite particles are easily decomposed. On the other hand, the magnetic composite particles for decontamination 1 according to the present invention are provided with the intermediate layer 15, which effectively prevents the magnetic composite particles for decontamination 1 from being decomposed. In other words, the magnetic composite particles for decontamination can be used in waste contaminated water, seawater, and the like, while the decomposition of the magnetic composite particles for decontamination is suppressed. As a result, the magnetic force of each particle can be held at a desired value, which enables the magnetic accumulation means to perform collection with high efficiency. Further, the adjustment of the reaction group of the intermediate layer 15 provides an advantage that a desired amount of the trapping compound 18 can be introduced into the magnetic nanoparticle 10. Note that the composite particles can be fabricated also by a combination of various types of magnetic materials and different types of trapping compounds.

Suitable examples of the intermediate layer 15 include lipid, detergent, and polymer. Inorganic substances, such as silica, and so-called plastic materials may also be used. Examples of polymer include polymers, such as polyethylene glycol, having, at its terminal, an alkoxysilyl group, a chlorosilyl group, an isocyanate silyl group, or a mercapto group, cationic polyelectrolytes such as poly-L-lysine, poly(diallyldimethylammonium chloride), methyl glycol chitosan (MGch), poly(allylamine hydrochloride), poly(acrylamide-co-diallyldimethylammonium chloride), and diallyldimethylammonium, and polyanionic electrolytes such as 4-styrene sulfonic acid sodium, poly(4-styrenesulfonic acid-co-maleic acid) sodium, polyanetholesulfonic acid sodium, poly(2-acrylamide-2-methyl-1-propanesulfonic acid), poly(4-styrenesulfonic acid) ammonium, poly(4-styrenesulfonic acid) lithium, poly(4-styrenesulfonic acid), poly(4-styrenesulfonic acid)-co-maleic acid) sodium, poly(acrylic acid, sodium salt), poly(vinyl sulfonic acid, sodium salt), poly(vinyl sulfate) potassium chloride, poly(4-styrenesulfonic acid sodium), and potassium polyvinyl sulfate (PVSK). Examples of the reaction group of the intermediate layer 15 include an avidin-biotin system bond, an epoxy group, a tosyl group, an ester group, a thiol group, an amino group, an acyl halide group, an N-hydroxysuccinimide ester group, an aldehyde group, a maleimide group, a vinyl sulfone group, a benzotriazole carbonate group, and a bromoacetamide group. A cross-linking polymer, such as polyethylene, which has an effect of improving the heat resistance, weather resistance, and the like by radioactive radiation, may be partially included. Further, any publicly-known detergent can be used for the magnetic nanoparticles. The intermediate layer 15 may be formed of one type, or may be formed of a plurality of types.

The size of the magnetic composite particle for decontamination is preferably in the range of 10 nm to 5 mm in terms of the balance among the dispersion property, the specific surface area, and the magnetic accumulation. The size is more preferably in the range of 50 nm to 500 µm, and still more preferably, in the range of 250 nm to 50 µm. The saturation magnetization of the magnetic composite particle for decontamination is preferably 5 emu/g or more in terms of improvement in accumulation efficiency by a magnetic force, and is, more preferably, 10 emu/g or more. Still more preferably, the saturation magnetization is 20 emu/g or more. Higher saturation magnetization is preferable to improve the efficiency of accumulation to a magnet, but in general, the saturation magnetization is 220 emu/g or less in terms of availability.

As shown in Fig. 2D, the magnetic nanoparticles used for the magnetic composite particles for decontamination may form a cluster 90 which is an aggregate of a plurality of magnetic nanoparticles 10. In the case of using the cluster as the magnetic nanoparticles, the intermediate layer 15 may be directly formed on the surface of the cluster 90. As shown in Fig. 2E, a coated magnetic nanoparticle 91 in which the intermediate layer 15 is coated on the surface layer of the cluster 90 formed of a plurality of magnetic nanoparticles 10 may be used.

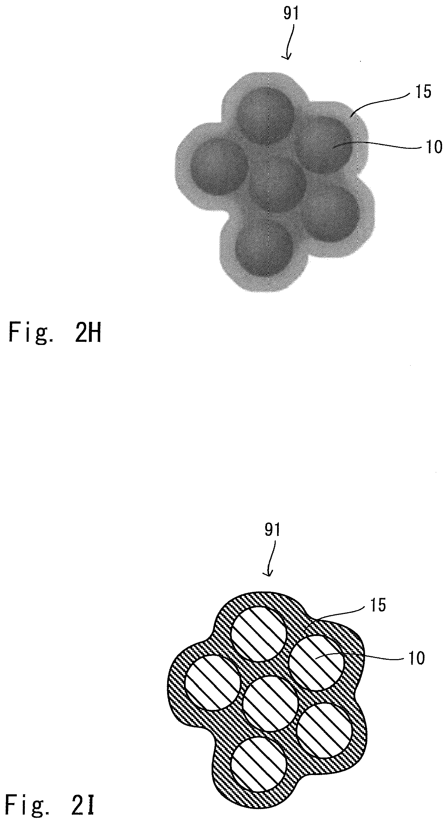

As shown in the explanatory diagram of Fig. 2H showing the coated magnetic nanoparticle 91 and Fig. 2I showing the sectional view thereof, the cluster 90 may be an aggregate of monodisperse magnetic nanoparticles 10 each coated with the intermediate layer 15. In any case, it is sufficient that the intermediate layer 15 is coated on at least a part of the surface layer of the magnetic nanoparticle 10. Note that the type of the intermediate layer that covers each magnetic nanoparticle may be different from the type of the intermediate layer that covers the entire cluster.

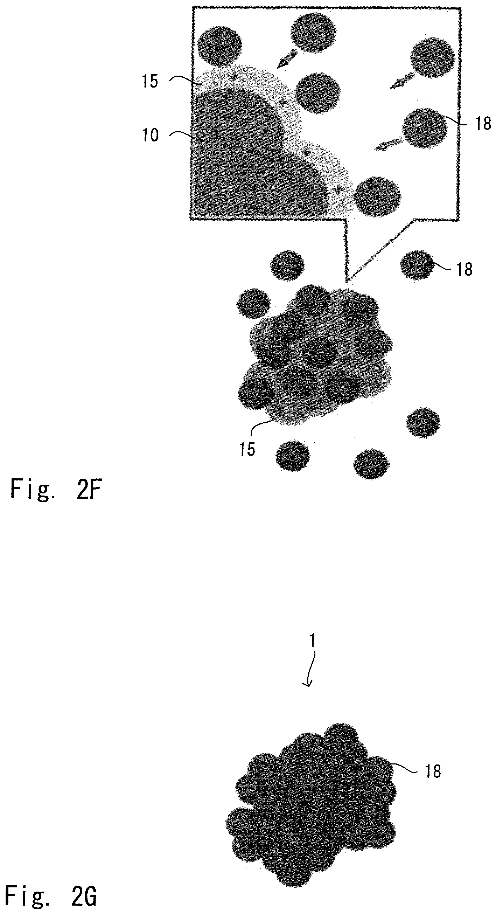

The trapping compound 18 is formed in the surface layer of at least a part of the magnetic composite particles for decontamination (see Fig. 2G). Fig. 2F shows an embodiment of the invention in which the trapping compound 18 and the intermediate layer 15 are bonded together by an electrostatic bond. In this embodiment, the magnetic composite particle for decontamination 1 causes the positively-charged intermediate layer 15 to be bonded with the negatively-charged cluster 90 by an electrostatic bond, and further causes the negatively-charged trapping compound 18 to be bonded with the intermediate layer 15. The magnetic nanoparticles 10 form the cluster 90, which provides an advantage that the accumulation force and accumulation speed obtained by the magnetic force of the magnetic composite particles for decontamination 1 can be increased and the magnetic accumulation efficiency can be improved.

From the viewpoint of effectively suppressing the decomposition of the magnetic composite particles for decontamination 1, 50% or more of the surface layer of the magnetic nanoparticles is preferably coated with the intermediate layer, and more preferably, 80% or more of the surface layer is coated with the intermediate layer.

Next, the magnetic composite particles for decontamination 1 injected into the radioactive substances-contaminated water 20 trap the radioactive substance family (see Step 2 in Fig. 3B). The radioactive contaminated water may be stirred, dispersed, or heated, for example, as needed.

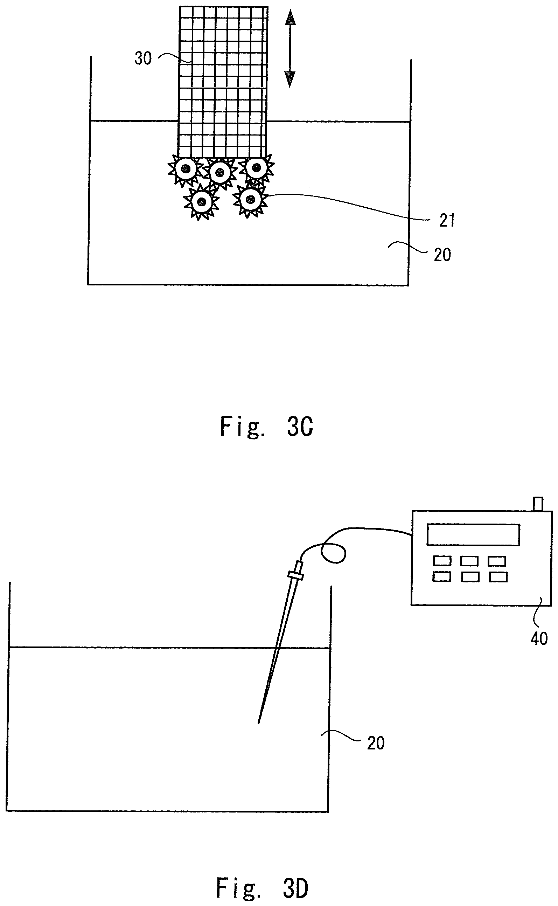

After that, magnetic accumulation means 30 is immersed in the radioactive substances-contaminated water to accumulate the magnetic composite particles for decontamination 1. Then, after the magnetic accumulation means 30 is separated from the radioactive substances-contaminated water, the generation of magnetism is turned off to thereby collect the radioactive substance family (see Step 3 in Fig. 3C). Specifically, the magnetic composite particles for decontamination 1 having trapped the radioactive substance family are accumulated by the magnetic force of the magnetic accumulation means 30, and the magnetic composite particles 1 are collected. Accordingly, the radioactive substance family can be collected easily and efficiently. Instead of immersing the magnetic accumulation means 30 in the radioactive substances-contaminated water, the magnetic accumulation means 30 may be brought into contact or brought into close contact with the outer wall of the container, to thereby accumulate, separate, and collect the magnetic composite particles for decontamination 1.

The collected magnetic composite particles for decontamination 1 are sealed in the container that shields gamma-rays by using concrete, steel, lead, or the like. In the case of gamma-rays, concrete is formed with a thickness of 50 cm or more, and lead is formed with a thickness of 10 cm or more. Though an example of gamma-rays is illustrated, each of a radioactive substance family that radiates alpha rays and a radioactive substance family that radiates beta rays may be sealed in a publicly-known shielding machine. Note that the collected radioactive substances can be reused as materials for a sealed radiation source for cancer treatment, a sealed radiation source for measurement apparatus, other sealed radiation sources, and non-sealed radiation sources.

The magnetic accumulation means 30 has a function capable of turning on and off a magnetic force, and a transfer mechanism. For example, an electromagnet, a superconducting magnet, and the like are preferably used. The ON-OFF control of the magnetic force can be made by a permanent magnet and shielding means. Further, the magnetic composite particles for decontamination 1 may be first collected by using a permanent magnet or the like and then collected by using a stronger electromagnet, a superconducting magnet, or the like, and after that, the magnet force of the electromagnet, superconducting magnet, or the like is turned off to thereby separate the magnetic composite particles for decontamination 1.

In the case of using a permanent magnet, ferrite, an Ne-Fe-B alloy, and a samarium-cobalt alloy can be used, for example, though not particularly limited. When a strong magnetic force is required, an Ne-Fe-B alloy is preferable. Also in the case of using an electromagnet, a superconducting magnet, or the like, it is effective for the magnetic accumulation means 30 to be provided with shielding means so as to give directivity to a line of magnetic force of the magnet. To appropriately protect the magnetic accumulation means 30 against corrosion due to seawater, for example, the magnet or the like is hermetically sealed in a casing, as needed.

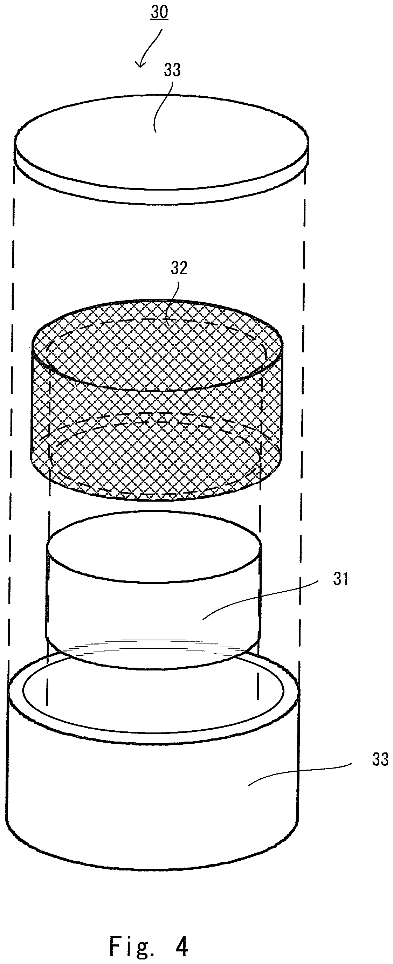

Fig. 4 is a schematic exploded perspective view showing an example of the primary part of the magnetic accumulation means 30 according to the first embodiment. The magnetic accumulation means 30 includes a magnet 31, shielding means 32, and a casing 33. The magnetic accumulation means 30 has a shielding function for giving directivity in a direction in which the magnetic field of the magnet 31 is generated. The shielding means 32 according to the first embodiment is formed of a yoke. As a matter of course, the shielding means is not limited thereto, and any material can be used as long as the material has a shielding function. In the first embodiment, the yoke serving as the shielding means 32 is formed of a cylindrical body having a concave shape that covers the side surface and the top surface of the magnet 31 so that a strong magnetic force is generated in one direction. The provision of the shielding means 32 increases the magnetic force from the bottom surface of the magnet 31.

After collecting the magnetic composite particles for decontamination 1, for example, the magnetic accumulation means 30 shown in Fig. 4 separates the magnetic composite particles for decontamination 1 from the magnet 31 by using a stronger electromagnet, superconducting magnet, or the like. Then, the magnetic force of the stronger electromagnet or superconducting magnet may be turned off to collect only the magnetic composite particles for decontamination 1.

After that, the radioactive concentration of the radioactive substances-contaminated water is remeasured by a sensor 40 (see Step 4 in Fig. 3D). Then, when it is determined that it is necessary to collect the radioactive substance family, Steps 1 to 3 described above are repeated. When it is determined that it is unnecessary to collect the radioactive substance family, the operation for collecting the radioactive substance family is finished. The water obtained after removing the radioactive substance family can be reused as a coolant for a nuclear power plant, for example.

A method for fabricating the magnetic composite particle for decontamination according to this embodiment includes the steps of: forming a coated magnetic nanoparticle by using a magnetic nanoparticle and an intermediate layer forming compound for forming an intermediate layer that covers at least a part of a surface layer of the magnetic nanoparticle; and introducing a trapping compound into the coated magnetic nanoparticle so as to be disposed in at least a part of the surface layer. Though the step of introducing the trapping compound is not limited within the scope of the present invention, a method for obtaining the magnetic composite particle for decontamination by mixing and stirring the coated magnetic nanoparticle and the trapping compound in dispersions is suitable. For example, it is suitable to employ a method including at least one of the steps of: mixing and stirring dispersions of one of the trapping compound and the coated magnetic nanoparticle, and mixing the other of the trapping compound and the coated magnetic nanoparticle into the dispersions; and (ii) mixing and stirring dispersions including the trapping compound and the coated magnetic nanoparticle by transferring the dispersions between a plurality of containers under positive pressure or negative pressure. The step of forming the coated magnetic nanoparticle is not limited within the scope of the present invention. However, as a preferred example, a method for mixing and stirring, in dispersions, the magnetic nanoparticle and the intermediate layer forming compound for forming the intermediate layer may be employed.

Hereinafter, an example of a suitable method for fabricating the magnetic composite particle for decontamination according to this embodiment will be described. However, the method for fabricating the magnetic composite particle for decontamination according to the present invention is not limited to the following method.

First, dispersions of the magnetic nanoparticles 10, dispersions of compounds forming the intermediate layer (hereinafter, referred to as "intermediate layer forming compounds"), and dispersions of trapping compounds are prepared. The method for fabricating the magnetic nanoparticles 10 is not particularly limited, and any publicly-known method can be used without limitation. As for the "dispersions" herein described, any dispersions can be used regardless of whether particles are dissolved or not. A water-type solvent, an organic solvent, and a water-type solvent/organic solvent mixed type solvent are preferably used as the dispersions. Additives can be arbitrarily added within the scope of the present invention.

Though the method for forming the magnetic nanoparticles 10 is not particularly limited, fabrication methods described in the following examples can be illustrated by way of example. The magnetic nanoparticles may be monodisperse particles or the cluster 90. The method for preparing the dispersions of the magnetic nanoparticles, the dispersions of the intermediate layer forming compounds, and the dispersions of trapping compounds are not particularly limited, and any publicly-known method can be used without limitation. Fabrication methods described in the following examples can be illustrated by way of example.

Next, the coated magnetic nanoparticle 91 is formed. The method for forming the coated magnetic nanoparticle is not particularly limited, and any publicly-known method can be used without limitation. In the first embodiment, the dispersions of the intermediate layer forming compounds and the dispersions of the magnetic nanoparticles are prepared, and the dispersions are mixed and stirred, thereby obtaining the coated magnetic nanoparticle. The method for mixing and stirring is not particularly limited within the scope of the present invention. For example, while the dispersions of the intermediate layer forming compounds are dispersed by a bathtub-type ultrasonic disintegrator, ultrasonic treatment is performed by dripping the dispersions of the magnetic nanoparticles. Then, the operation of performing centrifugal separation to remove the supernatant is carried out once or a plurality of times, thereby obtaining the coated magnetic nanoparticle. The mixing and stirring conditions and the dispersions are changed as appropriate depending on the desired particle form, thereby obtaining the coated magnetic nanoparticle which covers the cluster 90 as shown in Fig. 2E, the coated magnetic nanoparticle in which the monodisperse magnetic nanoparticles 10 are coated with the intermediate layer 15 as shown in Fig. 2H, and the coated magnetic nanoparticle in a monodisperse state in which the intermediate layer is coated on the monodisperse magnetic nanoparticles, for example. The method for mixing the dispersions of the intermediate layer forming compounds and the dispersions of the magnetic nanoparticles has been described above as an example, but the method is not limited thereto. For example, the coated magnetic nanoparticle may be synthesized by directly injecting the intermediate layer forming compounds and the magnetic nanoparticles into a solvent.

Next, the magnetic composite particles for decontamination are formed. Various methods for forming the magnetic composite particles for decontamination can be employed within the scope of the present invention. In the first embodiment, the magnetic composite particles for decontamination can be obtained by mixing and stirring the dispersions of trapping compounds and the dispersions of coated magnetic nanoparticles. More specifically, the dispersions of coated magnetic nanoparticles are dripped and mixed into the dispersions of trapping compounds, while the dispersions of trapping compounds are stirred. In the case of dripping the dispersions of coated magnetic nanoparticles, the stirring efficiency may be increased by using ultrasonic irradiation by inserting a probe of an ultrasonic disintegrator into a container containing the dispersions of trapping compounds. The mixture ratio of the dispersions of trapping compounds and the dispersions of coated magnetic nanoparticles is not particularly limited as long as the mixture ratio falls within the range in which the magnetic composite particles for decontamination can be formed. The mixture ratio is preferably in the range of 10:1 to 1:10, more preferably, in the range of 2:1 to 1:8, still more preferably, in the range of 1:1 to 1:6, and especially preferably, in the range of 1:3 to 1:4. When a reaction group to be bonded with the trapping compound 18 is introduced into the compound forming the intermediate layer 15, an additive such as a catalyst or the like for promoting the reaction may be appropriately added, as needed. Note that the dispersions of trapping compounds may be dripped and mixed into the dispersions of coated magnetic nanoparticles, while the dispersions of coated magnetic nanoparticles are stirred.

### (First Modified Example)

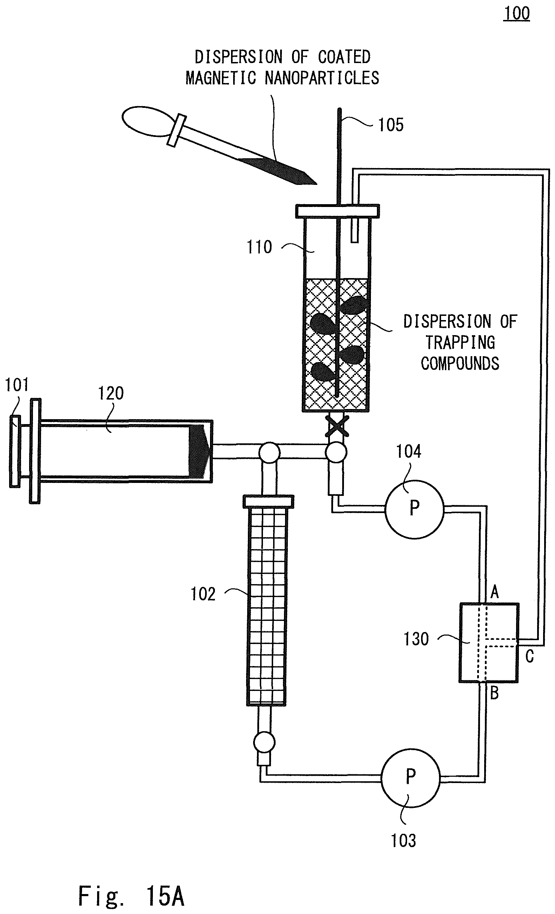

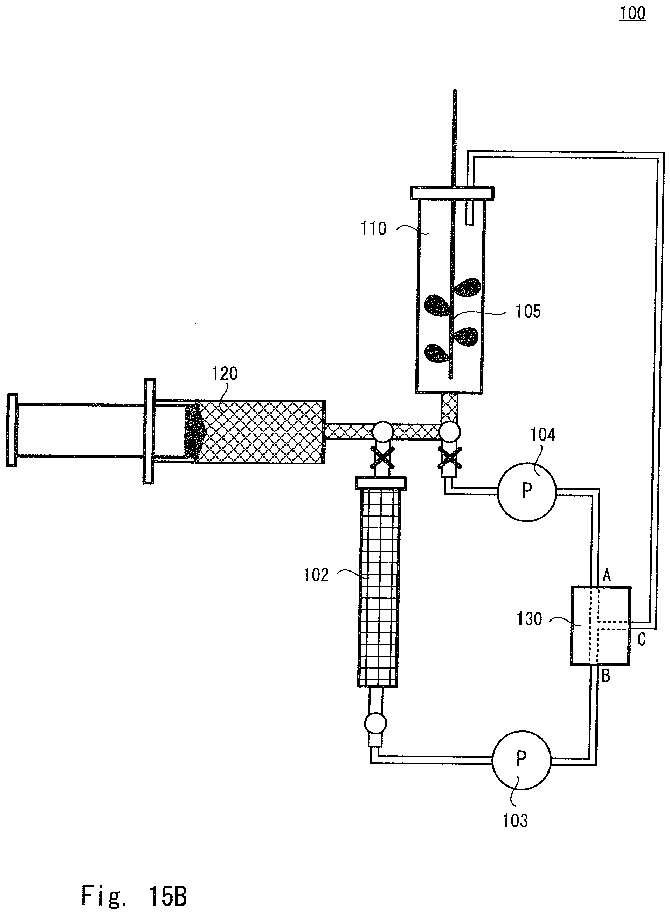

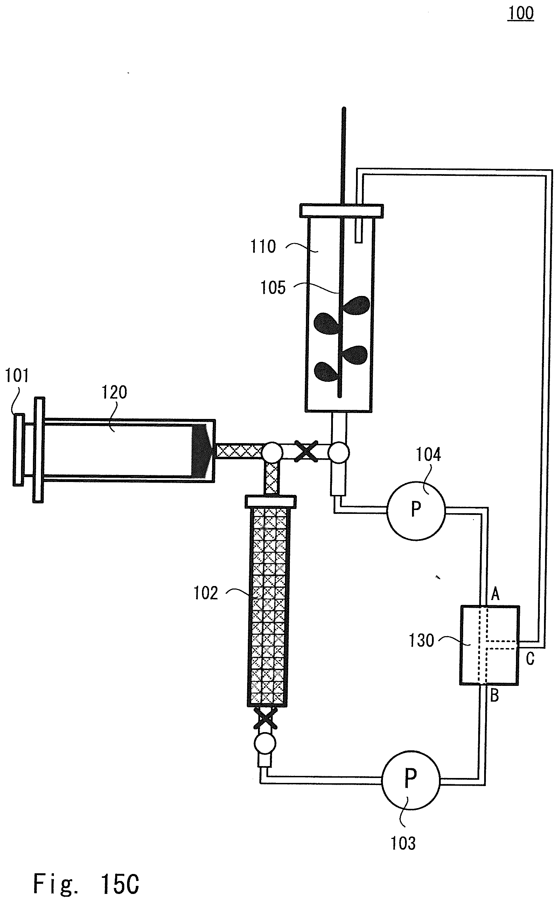

The magnetic composite particles for decontamination may be formed by the following method, instead of the method of dripping the dispersions of coated magnetic nanoparticles into the dispersions of trapping compounds described above. Figs. 15A to 15E are schematic diagrams for explaining a method for fabricating the magnetic composite particles for decontamination by using a mixing/stirring device 100 according to a first modified example. First, as shown in Fig. 15A, the dispersions of trapping compounds are stirred in a container 110 by stirring means 105. In this state, the dispersions of coated magnetic nanoparticles are dripped and further mixed and stirred. Referring next to Fig. 15B, the contents of the container 110 are forcibly transferred to a container 120. After that, as shown in Fig. 15C, the contents of the container 120 are forcibly transferred to a static mixer 102 by a piston 101.

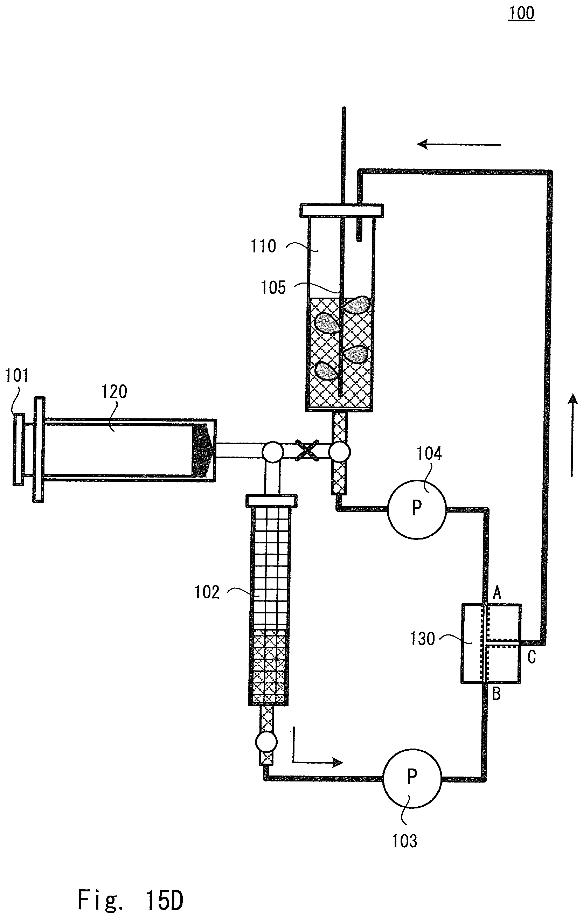

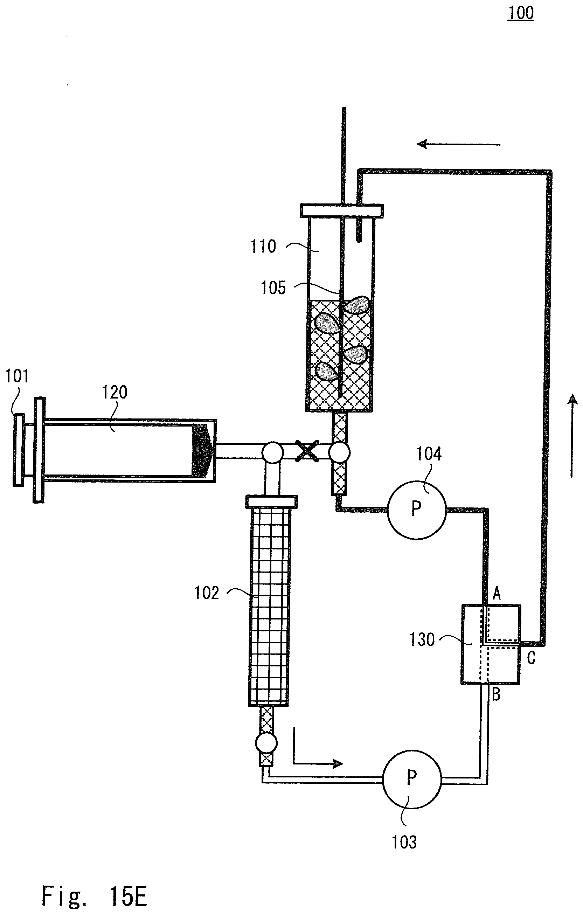

Subsequently, the contents of the static mixer 102 are press-fit into an inlet B of a micromixer 130 by a tube pump 103 (see Fig. 15C). As a result, the liquid discharged from an outlet C of the micromixer 130 starts to accumulate in the container 110 (see Fig. 15D). The contents of the container 110 are press-fit into an inlet A of the micromixer 130 through a tube pump 104. As a result, the liquid press-fit into the inlet A and the inlet B of the micromixer 130 is mixed and discharged from the outlet C. After these operations are continuously performed, the container 110 is filled up, and the container 120 is emptied (see Fig. 15E). The magnetic composite particles for decontamination are obtained by repeating these series of operations once or a plurality of times.

The method according to the first modified example has an advantage that synthesis can be achieved with higher efficiency, as compared with the method of dripping and mixing the dispersions of coated magnetic nanoparticles while stirring the dispersions of trapping compounds. This advantage is prominent especially when the scale of synthesis is large.

Note that the number of micromixers 130 can be increased as appropriate. An increase in the number of micromixers facilitates mass production without greatly changing the conditions for small-scale production. For example, 12 micromixers may be used at the same time by combining a pump of MCP Standard (manufactured by ISMATEC) and a 24-channel pump head capable of sending a liquid by driving 24 tube pumps by using one pump. In this case, the processing speed is 12-fold higher.

### (Second modified example)

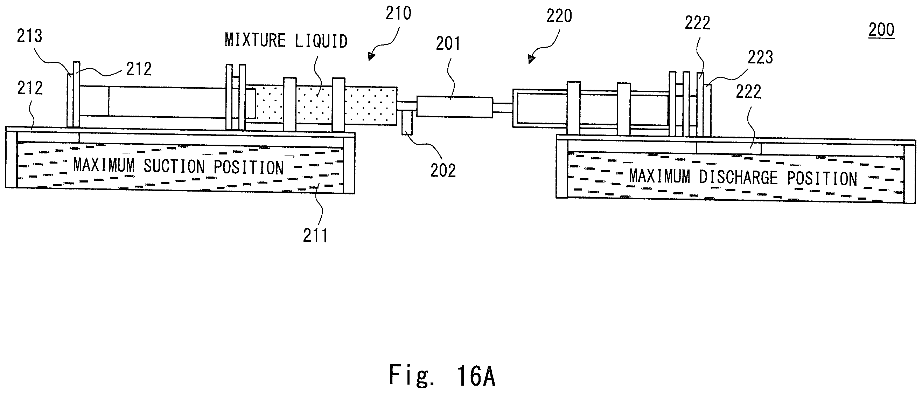

Figs. 16A to 16D are schematic side views for explaining a method for fabricating a magnetic composite particle for decontamination by using a mixing/stirring device according to a second modified example. A mixing/stirring device 200 includes a microchannel 201, a three-way stopcock 202 which is capable of opening only at two desired locations, a first syringe 210, a second syringe 220, a third syringe (not shown) for injecting dispersions of coated magnetic nanoparticles, a fourth syringe (not shown) for injecting dispersions of trapping compounds, a first stage 211, and a second stage 221. Note that "microchannel" herein described includes a so-called microreactor and micromixer, for example.

The microchannel 201 is connected to each of the three-way stopcock 202, which is capable of opening only at desired two locations, the first syringe 210, and the second syringe 220. The first syringe 210 is mounted to the first motor-driven stage 211. The pressing and suction of the first syringe 210 can be controlled by a first syringe control mechanism 212 which is provided to the first motor-driven stage 211. The second syringe 220 is mounted to the second motor-driven stage 221. The pressing and suction of the second syringe 220 can be controlled by a second syringe control mechanism 222 which is provided to the second motor-driven stage 221. The dispersions of trapping compounds are injected into the first syringe 210 in advance, and the second syringe 220 is emptied. Further, the dispersions of coated magnetic nanoparticles are injected into the third syringe, and the dispersions of trapping compounds are injected into the fourth syringe. The third syringe and the fourth syringe are connected to the three-way stopcock 202 at an appropriate timing so that the total amount or a part of the dispersions can be injected into the first syringe 210 or the second syringe.

First, a piston 223 of the second syringe 220 is pulled and a half amount of the dispersions of trapping compounds is sucked into the second syringe 220. Though this example illustrates an example in which the dispersions of trapping compounds are injected into the second syringe 220 in two separate injections, the number of injections of the dispersions of trapping compounds can be changed as appropriate depending on the scale of synthesis, for example. The dispersions may be injected at a time, or may be injected in three or more injections. After that, the channel between the second syringe 220 and the third syringe is opened through operation of the three-way stopcock 202, thereby allowing the dispersions of coated magnetic nanoparticles to be sucked from the third syringe into the second syringe 220 under negative pressure. This allows the dispersions of trapping compounds and the dispersions of coated magnetic nanoparticles to be mixed in the second syringe 220 (the above process is referred to as "process A").

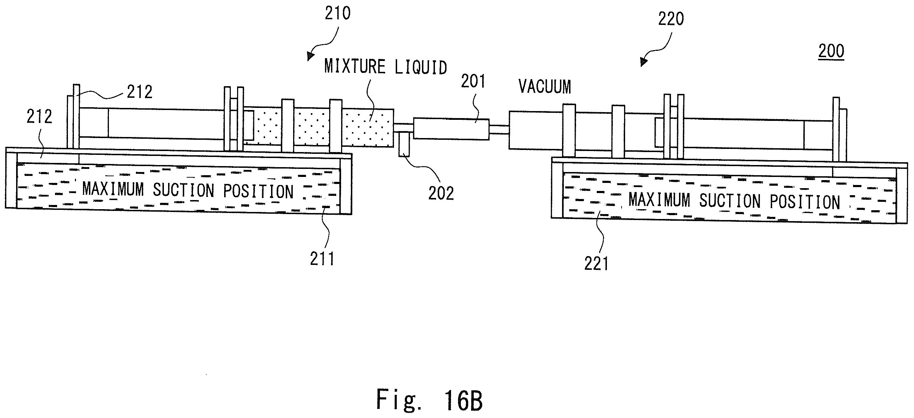

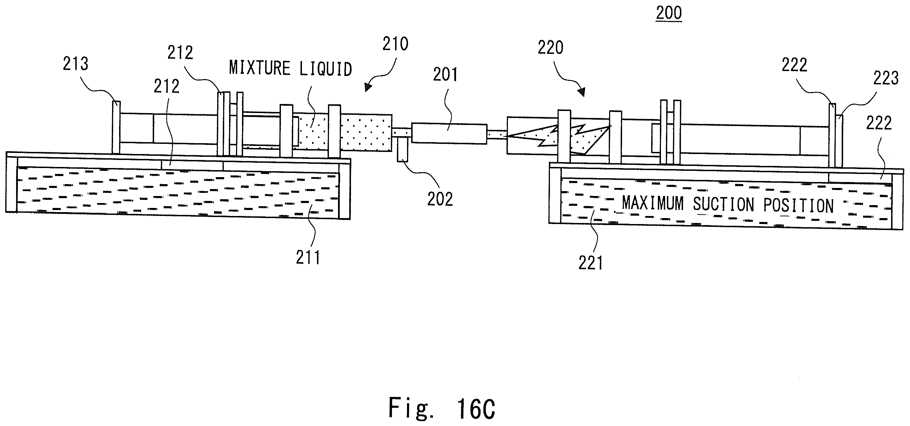

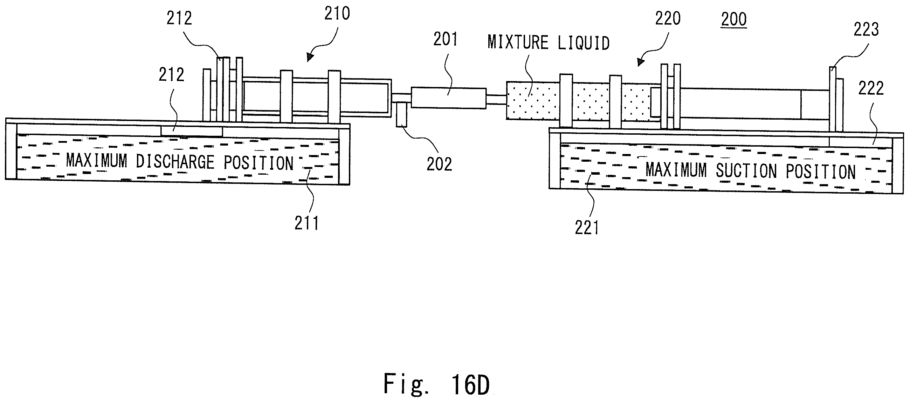

Next, the three-way stopcock 202 is operated and a piston 213 of the first syringe 210 is rapidly pulled to a maximum extent by using the first syringe control mechanism 212, thereby allowing a half amount, for example, of the liquid mixture of the second syringe 220 to pass through a narrow space of the microchannel 201 and allowing the total amount of the liquid to be transferred to the first syringe 210 (see Fig. 16A). After that, the piston 223 of the second syringe 220 is rapidly pulled to a maximum extent by using the second syringe control mechanism 222 (see Fig. 16B), thereby allowing the liquid mixture within the first syringe 210 to pass through the narrow space of the microchannel 201 (see Fig. 16C) and allowing the total amount of the liquid to be transferred to the second syringe 220 (see Fig. 16D). Next, the piston 213 of the first syringe 210 is rapidly pulled to a maximum extent in a similar manner, thereby allowing the liquid mixture within the second syringe 220 to pass through the narrow space of the microchannel 201 and allowing the total amount of the liquid to be transferred to the first syringe 210 (the above process is referred to as "process B"). The process B is repeated once or a plurality of times. The process B enables the total amount of the liquid mixture within each of the first syringe 210 and the second syringe 220 to be forcibly transferred between the first syringe 210, the microchannel 201, and the second syringe 220.

In the case of adding the dispersions of trapping compounds and the dispersions of coated magnetic nanoparticles in separate injections, the following process C is carried out. Specifically, first, the trapping compounds, which are not added to the liquid mixture yet, are injected into the first syringe 210. Next, the piston 223 of the second syringe 220 is pulled to suck the dispersions of trapping compounds remaining in the first syringe 210. After that, the three-way stopcock 202 and the third syringe are connected, and the dispersions of coated magnetic nanoparticles are sucked and transferred from the third syringe to the second syringe 220 (the above process is referred to as "process C"). Then, the process B is carried out. The processes C and B are repeatedly carried out depending on the number of injections of the dispersions of trapping compounds and the dispersions of coated magnetic nanoparticles.

While the second modified example illustrates an example in which the dispersions are transferred between the syringes by suction under negative pressure, pressure transmission under positive pressure may also be used. The operations of the processes B and C are repeatedly carried out until a predetermined amount of coated magnetic nanoparticles and a predetermined amount of trapping compounds are added. Through these processes, the magnetic composite particles for decontamination are synthesized.

The method according to the second modified example employs the method in which the microchannel is connected between the syringes and a negative pressure is applied to cause a liquid to forcibly pass through the microchannel, thereby achieving mixing of liquids with high efficiency. This advantage is prominent especially when the scale of synthesis is large. Further, the use of a negative pressure prevents the liquid from leaking out, as compared with the method of using a positive pressure, even when a pipe is damaged or falls off, for example, which is advantageous in terms of safety. Furthermore, it is expected that the use of a negative pressure enables deaerating of dissolved gas and increases the antioxidant effect and the efficiency of contact between particles. Moreover, as compared with the case of using a positive pressure, the method of using a negative pressure has such an advantage that each member need not have a high mechanical strength, so that a disposable syringe or the like which is effective for omitting a washing process or the like and for preventing contamination of foreign matter can be easily used. For a similar reason, a general-purpose syringe can be used, which is advantageous in that the design can be easily changed for small-lot production as well as mass production. The same holds true for the microchannel. For example, an inexpensive, disposable microchannel which is made of plastic and used for the purpose of cell culture, for example, can be used. An increase in the number of apparatuses facilitates mass production under the same conditions as those for small-lot production. Furthermore, the control for the first syringe control mechanism 212 and the second syringe control mechanism 222 can be managed by a control device, so that unmanned operation and continuous processing can also be achieved.

The microchannel of the second modified example may be a reaction field such as a mixing needle or an elongated hard tube. While the second modified example illustrates an example in which the dispersions are transferred between the first syringe 210 and the second syringe 220 under negative pressure, the negative pressure may be replaced by a positive pressure.

In the radioactive substance family decontamination method according to the first embodiment, the magnetic accumulation means 30 is immersed in the radioactive substances-contaminated water and is pulled out, and after the magnetic accumulation means is pulled out, the generation of magnetism is turned off to collect the radioactive substance family, so that excellent operability and high efficiency can be achieved. In addition, there is an excellent advantage that the magnetic accumulation means can be repeatedly used. There is another excellent advantage that the need for introducing special facilities or the like is eliminated. That is, the radioactive substance family decontamination method according to the first embodiment is capable of collecting the radioactive substance family with high efficiency.

Further, unlike Non Patent Literature 5, the formation can be carried out without using any expensive compound, thereby achieving low cost. Furthermore, the magnetic composite particles for decontamination have a multilayer structure in which the intermediate layer is formed between the magnetic nanoparticle and the trapping compound, which enhances the environmental tolerance. Since the magnetic nanoparticle surface layer is coated with ferric ferrocyanide in Non Patent Literatures 4, 6, and 7, for example, in an alkaline region of pH 8 or more in which both the magnetic nanoparticle and ferric ferrocyanide show a negative surface potential, a repulsive force is generated between the magnetic nanoparticle and ferric ferrocyanide. This is disadvantageous in that ferric ferrocyanide is easily removed from the magnetic nanoparticle surface. Non Patent Literature 4 has such a problem that perchloric acid, which entails a risk of explosion or the like, is used as a material.

The magnetic composite particle for decontamination according to the first embodiment has an advantage that a cluster (a mass of magnetic nanoparticles) can be easily formed, thereby easily increasing the accumulation force and the accumulation rate by magnetism. In the case of forming a cluster, the cluster is coated with two layers, i.e., the intermediate layer and the trapping compound, thereby making it possible to provide physically stable particles. This provides an advantageous effect that magnetic composite particles for decontamination having high environmental tolerance can be provided.

In the case of collecting the radioactive substance family from contaminated soil, it is desirable to collect in advance magnetic materials contained in the contaminated soil or in dispersions of the contaminated soil, by magnetic separation, before the magnetic composite particles for decontamination are injected into the contaminated soil or the dispersions of the contaminated soil. This makes it possible to achieve trapping and collection of the radioactive substance family by the magnetic composite particles for decontamination with high efficiency.

Though the first embodiment illustrates an example having a three-layer structure of the magnetic nanoparticle, the intermediate layer, and the trapping compound, a five-layer structure of the magnetic nanoparticle, the intermediate layer, the trapping compound, the intermediate layer, and the trapping compound may also be used. Alternatively, a six-layer structure of the magnetic nanoparticle, the intermediate layer, the trapping compound, the intermediate layer, the trapping compound, and the intermediate layer may also be used, for example. Each of the magnetic nanoparticle, the intermediate layer, and the trapping compound to be used may be formed of one type, or may be formed of a plurality of types.

The radioactive substance family decontamination system and the radioactive substance family decontamination method are not limited to the examples of the first embodiment described above, but can be modified in various manners. For example, the radioactive substance family decontamination system may include a liquid inlet, a tank for mixing magnetic composite particles for decontamination, a tank for collecting magnetic composite particles for decontamination by using a magnetic force, and a filter. For example, along with the injection of a liquid from the liquid inlet, the magnetic composite particles for decontamination, which are preliminarily set depending on the amount of injected liquid and the degree of contamination, for example, are injected into the tank for mixing magnetic composite particles for decontamination. Then, the liquid and the magnetic composite particles for decontamination are sufficiently mixed in the tank for mixing magnetic composite particles for decontamination. After that, the liquid containing the magnetic composite particles for decontamination is transferred to the tank for collecting magnetic composite particles for decontamination by using a magnetic force, and the magnetic composite particles for decontamination are collected by the magnetic accumulation means. Then, the resultant is allowed to pass through the filter, if necessary, depending on the intended use. Such a radioactive substance family decontamination system can be suitably used as a water purifier, a water purification facility, and a water purification system for a condominium, for example.

### [Second Embodiment]

Next, an example of the radioactive substance family decontamination method, which is different from the above embodiment, will be described. The basic method of a radioactive substance family decontamination method according to a second embodiment is similar to that of the first embodiment except for the following point. That is, the radioactive substance family decontamination method according to the second embodiment differs from the first embodiment in the method of collecting magnetic composite particles for decontamination. In the first embodiment, the magnetic accumulation means is directly immersed in the liquid containing the radioactive substance family and is pulled out, whereas in the second embodiment, the magnetic composite particles for decontamination are collected by a filter capable of trapping magnetic nanoparticles.

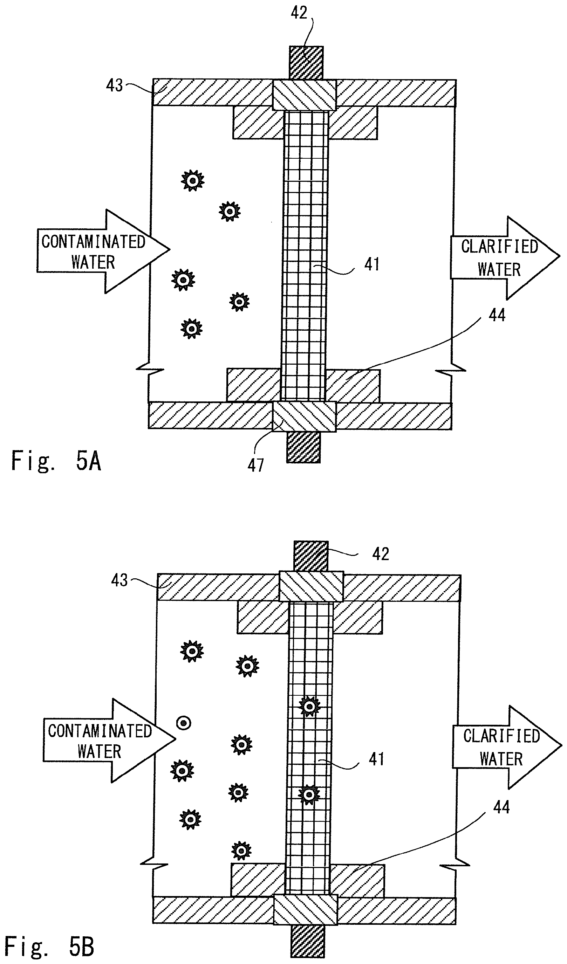

Figs. 5A and 5B schematic explanatory diagrams each showing an example of the radioactive substance family decontamination method according to the second embodiment. In the second embodiment, as shown in Fig. 5A, there are provided a magnetic filter 41 serving as magnetic accumulation means and a magnetic force control unit 42. There are also provided a purification tube 43 provided with the magnetic filter 41, a support portion 44 for supporting the magnetic filter 41, a joint portion 47, and the like.

The purification tube 43 is formed of a cylindrical body. The support portion 44 has a function of holding the magnetic filter 41, and is formed circumferentially on the inner wall of the purification tube 43. The joint portion 47 is a portion for allowing the magnetic filter 41 to be detachably mounted from the purification tube 43. In other words, the purification tube 43 is configured to be separable at the location of the joint portion 47. The shape of each of the purification tube 43 and the support portion 44 can be arbitrarily changed. The shape of the magnetic filter 41 can also be arbitrarily changed.

The magnetic filter 41 is not particularly limited as long as the magnetic filter can trap magnetic composite particles for decontamination. Preferred examples of the magnetic filter include a sintered wire mesh filter which is obtained by laminating at least a plurality of sheets of magnetic wire mesh and thereafter sintering them, and has a number of void portions (see Patent Literature 2 described above). The use of the sintered wire mesh filter obtained by laminating and sintering sheets of magnetic wire mesh as the magnetic filter 41 increases the rigidity and durability. Further, the efficiency of trapping magnetic nanoparticles can be increased. Instead of providing the support portion 44, a groove or the like for allowing the magnetic filter 41 to fit the inner wall of the purification tube 43 may be provided. Alternatively, a pre-filter or the like may be provided at the preceding stage of the magnetic filter 41 so as to prevent clogging by coarse particles or the like.

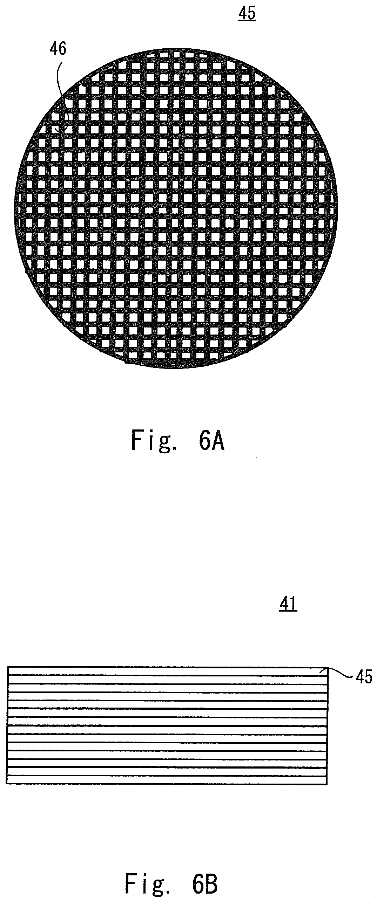

Fig. 6A is a schematic top view showing an example of a sheet of magnetic wire mesh 45. Fig. 6B is a schematic side view of the magnetic filter 41. The example shown in Fig. 6A illustrates an example of the magnetic wire mesh 45 having a two-dimensional net structure, but any publicly-known shape can be used without limitation as the shape of a sheet of magnetic wire mesh 45. The magnetic wire mesh 45 may have a three-dimensional net structure. The diameter of each void portion 46 is in an order of scales from millimeters to nanometers, for example. Further, the density of the void portions 46 can be arbitrarily designed depending on the intended use. The diameter of each void portion 46 of the magnetic wire mesh 45 can be arbitrarily designed. For example, the diameter is constant in the depth direction, or the diameter increases in the depth direction.

The magnetic filter 41 is formed of at least a plurality of sheets of the magnetic wire mesh 45. Fig. 6B shows an example in which 14 sheets of the magnetic wire mesh 45 are laminated. The number of laminated sheets can be determined depending on the intended use or purpose, as long as the number is two or more. The laminated number of sheets of the magnetic wire mesh 45 of the magnetic filter 41 is preferably in the range of 10 to 15 in view of improvement in magnetic accumulation efficiency. The thickness of one sheet of the magnetic wire mesh 45 is not particularly limited, but is about 0.1 mm to 3 mm, for example.

The magnetic filter 41 may have a configuration in which a layer having no magnetism for reinforcing the mechanical strength is inserted as appropriate between the sheets of magnetic wire mesh 45 as a reinforcement layer. The strength or the like can be reinforced by laminating sheets of wire mesh having no magnetism. The strength can be reinforced also by disposing a support such as a porous glass filter separate from the magnetic filter 41 at a bottom portion of the magnetic filter 41.

The material of the magnetic wire mesh 45 is not particularly limited, as long as the material produces magnetic properties by the magnetic force control unit 42. Examples of the material include magnetite (Fe₃O₄), maghemite (Fe₂O₃), iron monoxide (FeO), iron nitride, ferrum (Fe), nickel, cobalt, a cobalt-platinum-chrome alloy, a barium-ferrite alloy, a manganese-aluminum alloy, an iron-platinum alloy, an iron-palladium alloy, a cobalt-platinum alloy, an iron-neodymium-boron alloy, and a samarium-cobalt alloy. Materials having high magnetic induction characteristics and high magnetic anisotropy are preferable. Examples of the preferable materials include magnetic stainless, such as ferritic stainless or martensitic stainless, which has high corrosion resistance, and FePt. Examples of the material of the magnetic wire mesh 45 may include materials having no magnetic properties, within the scope of the present invention.

In the radioactive substance family decontamination method, magnetic nanoparticles are trapped by use of the magnetic force of the magnetic force control unit 42 through the void portions of the magnetic filter 41. Accordingly, the appropriate size of each void portion is selected depending on the magnetic nanoparticles to be trapped. As a method for laminating sheets of the magnetic wire mesh 45, sheets of the magnetic wire mesh may be laminated so that the void portions 46 match each other, or may be laminated to form a three-dimensional net structure by shifting the positions of the void portions 46. The sheets of the magnetic wire mesh 45 in which the size of each void portion 46 is arbitrarily changed may be laminated. Specific examples include a sintered wire mesh filter obtained by laminating sheets of the magnetic wire mesh 45 such that the sizes of the void portions 46 gradually increase toward the upper portion, and a sintered wire mesh filter obtained by alternately laminating sheets of the magnetic wire mesh 45 with large-size void portions 46 and sheets of the magnetic wire mesh 45 with small-size void portions 46. The void portions of the magnetic filter 41 are obtained by laminating the sheets of the magnetic wire mesh 45 and thereafter sintering them. Accordingly, in general, the opening diameter of each void portion of the magnetic filter 41 is slightly smaller than that of each void portion 46 of the magnetic wire mesh 45.

A plurality of sets of the magnetic filters 41 obtained by laminating and sintering two or more sheets of magnetic wire mesh may be prepared and installed in a superimposed manner in the purification tube 43. Superimposing the plurality of sets of the magnetic filters 41 facilitates disassembly for cleaning when clogging occurs.

As a method for fabricating the magnetic wire mesh 45, any publicly-known method can be used without limitation. For example, the magnetic wire mesh can be fabricated by interleaving magnetic small-gage wires, or by heat-sealing coil-like small-gage wires. In the case of fabricating the magnetic wire mesh by heat-sealing coil-like small-gage wires, the contact area can be increased, which provides an advantageous effect that the accumulation surface of each magnetic nanoparticle can be increased.

Fabrication using a die is preferable in consideration of the precision (dimensional stability) of the magnetic wire mesh 45 and the shape stability. Metallic molding has an advantage that the void portions, the density of the void portions, the thickness of the magnetic wire mesh, and the like can be arbitrarily designed. In the case of using a die, for example, the magnetic wire mesh can be fabricated such that magnetic nanoparticles or melted magnetic nanoparticles are put into a die and fabricated and solidified, and are then taken out of the die. The solidification treatment is obtained by cooling after melting and sintering. Note that a heat-seal process, a press-fit process, a sintering process, or the like may be added after the fabrication of the magnetic wire mesh 45.

As described above, the magnetic filter 41 can be obtained by sintering. For example, the magnetic filter is obtained by laminating and sintering a plurality of sheets of the magnetic wire mesh 45 at high temperature in vacuum. This makes it possible to heat-seal a part of the void portions 46 while maintaining at least a part of the void portions 46, without completely melting the magnetic mesh. The sintering process prevents any shift or deformation due to an external force of the laminated sheets of the magnetic wire mesh 45. In other words, the sintering process can increase the rigidity of the magnetic filter 41.

The magnetic force control unit 42 is formed in a region opposed to the magnetic filter 41 at the outer side wall of the purification tube 43. In the second embodiment, the magnetic force control unit 42 is formed in a frame-like shape. However, the shape and installation position of the magnetic force control unit are not limited as long as the magnetic force control unit can expose the magnetic filter 41 to magnetism. The magnetic force control unit 42 includes a magnet and shielding means. The shielding means is formed of a magnetic force shielding member. This makes it possible to give directivity to a line of magnetic force of the magnet.

Note that the magnetic force control unit 42 does not necessarily include the shielding means, as long as the magnetic force control unit includes a magnet. Preferable examples of the material, shape, and the like of the magnet and the shielding means are described in the first embodiment. The provision of the shielding means can increase the magnetic force of the magnet with respect to the magnetic filter 41, and can achieve significant attenuation of the magnetic force in other portions. The shielding means is disposed so as to apply a magnetic force to the magnetic filter 41, thereby effectively applying the magnetic force to the magnetic filter 41.

A shielding plate may be detachably mounted between the purification tube 43 and the magnet. This makes it possible to control turning on and off the exposure of magnetism to the magnetic filter 41. Further, a magnet formed of an electromagnet may be installed in a fixed manner in the purification tube 43 so that the generation of a line of magnetic force can be turned on and off by turning on and off power.

Next, the radioactive substance family decontamination method according to the second embodiment will be described. First, radioactive substances-contaminated water is induced into the purification tube 43 and is filtered by the magnetic filter 41, while magnetism exposure is performed. As a result, the magnetic composite particles for decontamination 1 are trapped by the magnetic filter 41. In this case, a pressure or the like may be applied as needed.

Next, the magnetic composite particles for decontamination 1 are collected. The supply of the radioactive substances-contaminated water is first stopped. Then, the magnetic force of the magnetic filter 41 is turned off to separate the magnetic composite particles for decontamination 1, which are trapped by the magnetic filter 41, from the magnetic filter 41. Alternatively, the magnetic filter 41 may be taken out and placed in a radioactivity shielding member.

According to the second embodiment, the magnetic composite particles for decontamination are trapped and collected by using both the filtration method and the magnetic force control unit 42, thereby enabling highly efficient collection of the radioactive substance family. The method of the second embodiment may be carried out in combination with the method of the first embodiment. For example, most of the radioactive substance family may be removed by the first embodiment, and then, the radioactive substance family may be collected more reliably by using the magnetic filter of the second embodiment. Lamination of sheets of the magnetic wire mesh 45 to form the magnetic filter can increase the magnetic accumulation efficiency. In the case of using the magnetic filter shown in Figs. 5A and 5B, the sheets of the magnetic wire mesh 45 are laminated and sintered, which makes it possible to provide a magnetic filter that has high durability and prevents the laminated sheets of the magnetic wire mesh 45 from being shifted or deformed due to an external force. Though the filter obtained by laminating and sintering the sheets of the magnetic wire mesh 45 is illustrated as a suitable example of the magnetic filter, various types of magnetic filters can be used within the scope of the present invention.

### [Third Embodiment]

A radioactive substance family decontamination method according to a third embodiment has a basic structure similar to that of the second embodiment except for the following point. That is, the radioactive substance family decontamination method according to the third embodiment differs from the second embodiment in that filter absorbate removing means, which is not provided in the second embodiment, is provided.

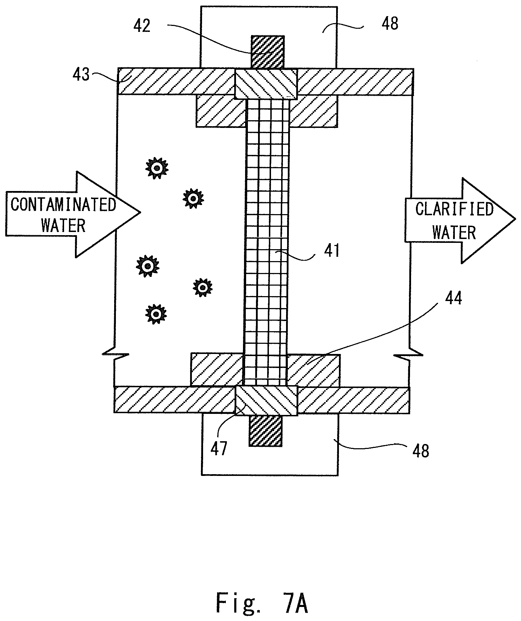

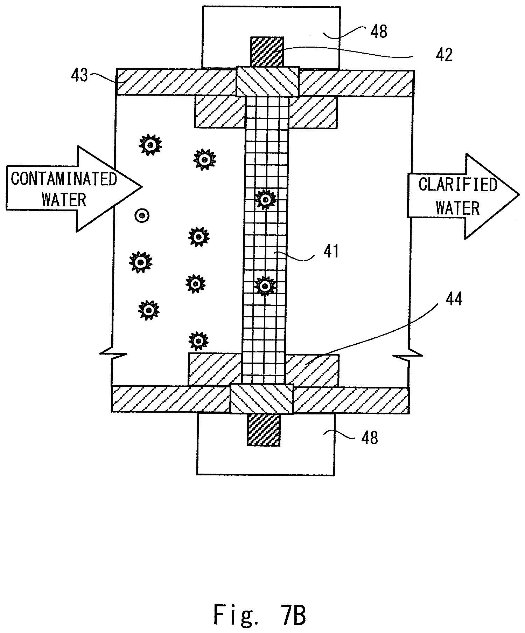

Figs. 7A and 7B are schematic explanatory diagrams for explaining an example of the radioactive substance family decontamination method according to the third embodiment. In the third embodiment, in addition of the second embodiment, ultrasonic wave application means 48 serving as the filter absorbate removing means is provided, for example.

The ultrasonic wave application means 48 is provided at an outer peripheral portion of the purification tube 43 so as to surround the magnetic force control unit 42. In other words, the ultrasonic wave application means 48 is provided on the side of the magnetic filter 41. The position and installation shape of the ultrasonic wave application means 48 are not limited.

The filter absorbate removing means is not limited to the ultrasonic wave application means 48. The filter absorbate removing means is not particularly limited as long as the filter absorbate removing means applies physical energy to the magnetic filter 41 and can achieve the objects of the present invention. Examples other than the ultrasonic wave application means include heating means, means for applying mechanical vibration having a frequency smaller than that of ultrasonic wave, and shock wave application means. Pressure regulation means can also be used. Other examples include activated light beam irradiation means utilizing the photothermal effect from light to heat by application of nanoplasmon of noble metal fine particles, activated light beam irradiation means using visible light or the like by utilizing a photocatalyst such as titanium oxide, and activated light beam irradiation means using ultraviolet light, ionizing radiation, or the like by utilizing an oxidation reaction. The filter absorbate removing means may be used singly or in combination. Among these examples, heating means, supersonic wave irradiation means, or pressure regulation means is especially preferably used in view of easiness.

While the magnetic control unit 42 exposes the magnetic filter 41 to magnetism, the radioactive substances-contaminated water 20 is supplied into the purification tube 43. The radioactive substances-contaminated water 20 permeates the magnetic filter 41, and non-magnetic nanoparticles, which are smaller than the size of each void portion, and a solvent are obtained as a filtrate (purified water). On the other hand, the magnetic composite particles for decontamination 1 which are smaller than the size of each void portion are trapped in the void portions of the magnetic filter 41. The particles, which are larger than the size of each void portion, excluding the magnetic nanoparticles, are cut off at the surface of the magnetic filter 41. When the amount of coarse particles is large, the coarse particles are preferably removed in advance from the radioactive substances-contaminated water 20 by another filter.

Next, the supply of the radioactive substances-contaminated water 20 is stopped, and the purification tube 43 provided on the side of the purification water is replaced with a shielding container (not shown) at the joint portion 47. Then, the magnetism exposure of the magnetic force control unit 42 is turned off, and ultrasonic waves are radiated by use of the ultrasonic wave application means 48. As a result, the magnetic composite particles for decontamination trapped in the void portions of the magnetic filter 41 are collected in the shielding container. In this case, the collection of the magnetic composite particles for decontamination may be promoted by applying a pressure, for example, as needed.

The radioactive substance family decontamination method and the radioactive substance family decontamination system according to the third embodiment provide the same effects as those of the second embodiment described above. In addition, in the third embodiment, the ultrasonic wave application means 48 is additionally provided in the case of collecting the magnetic composite particles for decontamination, which makes it possible to more effectively collect magnetic composite particles for decontamination. There is another advantage that the filter can be repeatedly used. In this case, there is an advantageous effect that the need for taking out and cleaning the filter is eliminated.

Note that the magnetic force accumulation means and the method for collecting the magnetic composite particles for decontamination having trapped radioactive substances are not limited to the methods described in the above embodiments, but can be modified in various manners. For example, the physically-adsorbed magnetic composite particles for decontamination may be scraped off by a scrape-off wiper or the like, with respect to the magnetic composite particles for decontamination having trapped radioactive substances collected by a magnetic force. Alternatively, a liquid containing the composite particles for decontamination having trapped the radioactive substance family may be injected into a cylindrical drum in which a permanent magnet is embedded, and the drum may be rotated to magnetically adsorb the magnetic nanoparticles, thereby physically scraping off the magnetic composite particles for decontamination by a scrape-off wiper or the like.

### [Fourth Embodiment]

A radioactive substance family decontamination method according to a fourth embodiment has a basic structure similar to that of the first embodiment except for the following point. That is, magnetic composite particles for decontamination used in the radioactive substance family decontamination method according to the fourth embodiment are different from those of the first embodiment.

The magnetic nanoparticles of the magnetic composite particles for decontamination according to the fourth embodiment form a basket-shaped skeleton having a hollow formed therein. The magnetic nanoparticles applicable to the fourth embodiment are not particularly limited. The magnetic composite particles for decontamination are composed of: a magnetic nanoparticle formed in a core portion and having a basket-shaped skeleton with a hollow formed therein; an intermediate layer that directly covers the magnetic nanoparticle; and a trapping compound formed in a surface layer. Note that the trapping compound may be included in the magnetic nanoparticle.

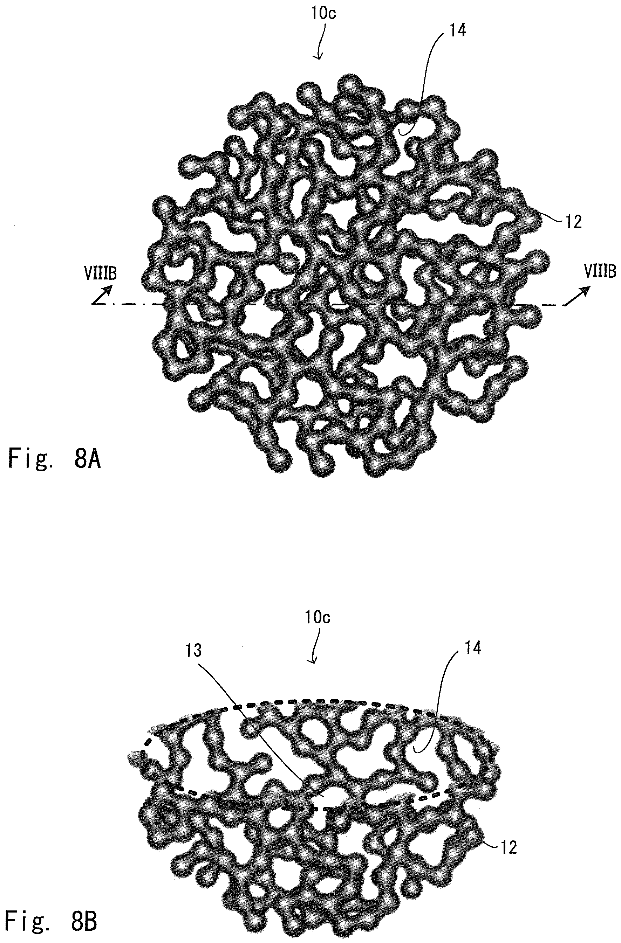

Fig. 8A is a conceptual diagram showing an example of a magnetic nanoparticle 10c according to the fourth embodiment. Fig. 8B is a schematic perspective view taken along the line VIIIB-VIIIB of Fig. 8A. The magnetic nanoparticle 10c according to the fourth embodiment is formed of a magnetic basket-shaped skeleton 12. The magnetic basket-shaped skeleton 12 is a substantially spherical skeleton as shown in Figs. 8A and 8B, and the inside thereof has a hollow structure 13. The magnetic basket-shaped skeleton 12 is formed of a sintered body of metallic nanoparticles containing nanoparticles containing at least partially one of Fe (ferrum), Co (cobalt), and Ni (nickel).

The magnetic basket-shaped skeleton 12 has a number of porous material like voids 14 formed therein. The porosity of the magnetic basket-shaped skeleton 12 is preferably 1% to 50%. When the porosity is less than 1 %, there is a possibility that it becomes difficult to fabricate the magnetic nanoparticles according to the present invention and to fabricate magnetic fine particles containing formulas. On the other hand, when the porosity exceeds 50%, there is a possibility that it becomes difficult to maintain the skeleton. The porosity is preferably in the range of 5% to 30% in view of the fabrication stability. The size and shape of each void 14 are not particularly limited as long as the magnetic basket-shaped skeleton can be maintained.

The thickness of the magnetic basket-shaped skeleton 12 is not particularly limited, but preferably ranges from 5 nm to 50 nm. The formation of the magnetic basket-shaped skeleton 12 with a thickness of 5 nm or more suppresses structural defects and enables stable fabrication. The formation of the magnetic basket-shaped skeleton with a thickness of 50 nm or less can increase the content of an agent or the like in the magnetic basket-shaped skeleton 12.

Note that the shape of the magnetic basket-shaped skeleton 12 is not particularly limited. The magnetic basket-shaped skeleton can be formed into an oval spherical shape or a rod shape, for example, by controlling the shape of a template particle.

As the material of the magnetic basket-shaped skeleton 12, any metallic nanoparticles that can form a sintered body and contain at least partially one of Fe, Co, and Ni can be used without limitation. Note that "nanoparticles containing at least partially one of Fe, Co, and Ni" include nanoparticles partially containing one of Fe, Co, and Ni, as well as nanoparticles partially containing two or more types of Fe, Co, and Ni. The "metallic nanoparticles" include nanoparticles formed only of metal, as well as nanoparticles formed of metal oxide, metallic nitride, or the like.

Examples of suitable materials of a sintered body precursor for forming a sintered body include: (1) transition metal-noble metal alloys such as an iron-platinum alloy (FePt), a cobalt-platinum alloy (CoPt), an iron-palladium alloy (FePd), and a cobalt-platinum alloy (CoPt); (2) ferri oxide compounds including magnetite (Fe₃O₄), maghemite (γ-diiron trioxide, γ-Fe₂O₃), and manganese (Mn) ferrite; (3) rare earth-transition metal alloys such as an iron-neodymium-boron alloy (NdFeB) and a samarium-cobalt alloy (SmCo); (4) ferrum (Fe), an iron-cobalt alloy(FeCo), and a nickel-iron alloy (NiFe); and (5) transition metal alloys including an iron nitride compound such as Fe₁₆N₂. Not only metal alloys, but also metallic nanoparticles including metal oxide can be suitably applied. In the above examples, materials including a small amount of other elements can also be suitably applied. For example, a material obtained by adding a third element, such as Cu or Ag, to an iron-platinum alloy can also be suitably applied.

In view of the improvement in the accumulation efficiency by a magnetic force, metallic nanoparticles exhibiting strong magnetism are preferably used as the material of the magnetic basket-shaped skeleton 12. For the use in vivo, magnetite (iron oxide, Fe₃O₄), maghemite (γ-diiron trioxide, γ-Fe₂O₃), iron monoxide, iron nitride, ferrum, an iron-platinum alloy, an iron-palladium alloy, and the like are preferably used as nanoparticles partially containing at least one of Fe, Co, and Ni, from the viewpoint of avoiding an adverse event due to toxicity.

The magnetic basket-shaped skeleton 12 may be formed only of a single material, or may be formed of a plurality of materials. The material and content of the nanoparticles containing at least partially one of Fe, Co, and Ni are appropriately selected so as to obtain a magnetic force depending on the intended use, for example. The metallic nanoparticles may be formed only of nanoparticles containing at least partially one of Fe, Co, and Ni, or may be formed by blending other metallic nanoparticles. The type of metal elements to be used is not particularly limited, but can be appropriately selected depending on the intended use. For example, an alloy formed of a combination of one or more types selected from the group consisting of copper, chrome, titanium, tantalum, tungsten, nickel, molybdenum, manganese, aluminum, and yttrium, or a single metal may be used.

The grain size of the magnetic basket-shaped skeleton 12 is not particularly limited, but can be appropriately selected depending on the intended use. The grain size of the magnetic basket-shaped skeleton 12 can be easily controlled by controlling the size of the template particle which is described later. In view of the easiness of fabrication, the grain size is preferably 50 nm or more and 10 µm or less.

The magnetic nanoparticles having the basket-shaped skeleton 12 according to the fourth embodiment can be fabricated by the method disclosed in Patent Literature 2. The method for forming the intermediate layer and the trapping compound on the magnetic nanoparticles is similar to that of the first embodiment described above. When the trapping compound is included in the magnetic nanoparticles, the magnetic nanoparticles can be fabricated by the method disclosed in Patent Literature 2. A polymerizable function may be modified in the trapping compound and cross-linked in the magnetic nanoparticles, to thereby trap the trapping compound in the magnetic nanoparticles.

The radioactive substance family decontamination method and the radioactive substance family decontamination system according to the fourth embodiment provide the same effects as those of the first embodiment. In the fourth embodiment, the inside of the magnetic nanoparticles has a hollow, which contributes to a light specific gravity of the magnetic composite particles for decontamination and an increase in the dispersion property in a liquid. Further, when the trapping compound is introduced into the magnetic nanoparticles, the trapping compound can be bound to both the inside of the magnetic nanoparticles and the surface layer, resulting in an increase in the introduction ratio of the trapping compound.

### [Fifth Embodiment]

A radioactive substance family decontamination method according to a fifth embodiment has a basic structure similar to that of the first embodiment except for the following point. That is, magnetic composite particles for decontamination used in the radioactive substance family decontamination method according to the fifth embodiment are different from those of the first embodiment.

The magnetic composite particles for decontamination according to the fifth embodiment are obtained such that the trapping compound and the coated magnetic nanoparticle are separately injected into radioactive substances-contaminated water, and a composite of the trapping compound and the coated magnetic nanoparticle is formed in the radioactive substances-contaminated water. Suitable examples of the principal components of the intermediate layer are described in the first embodiment.

The radioactive substance family decontamination system according to the fifth embodiment injects the coated magnetic nanoparticle and the trapping compound separately into radioactive substances-contaminated water, thereby forming the magnetic composite particle for decontamination. Next, the magnetic composite particle for decontamination traps a radioactive substance family. The trapping compound may first trap the radioactive substance family, and then the coated magnetic nanoparticle may trap the trapping compound having trapped the radioactive substance family. Both of them may be mixed. In the following process, decontamination is performed by a method similar to that of the above embodiments.

The radioactive substance family decontamination method and the radioactive substance family decontamination system according to the fifth embodiment provide the same effects as those of the first embodiment. Further, since the composite is formed in radioactive substances-contaminated water, there is an advantage that the need for forming the magnetic composite particle for decontamination in advance is eliminated.

The first to fifth embodiments described above illustrate radioactive cesium as an example of the radioactive substance family. The present invention is also applicable to strontium, thallium, uranium, plutonium, thorium, iodine, and the like which have radioactivity and stable isotopes. Though radioactive substances-contaminated water has been described above as an example of a liquid containing a radioactive substance family, the present invention is applicable to solvents in general other than water. Further, the above examples of the magnetic composite particles for decontamination are by way of example only, and the present invention is applicable to various forms of magnetic composite particles for decontamination. Though examples of radioactive substances-contaminated water have been described in the above embodiments, the present invention can also be used to remove non-radioactive substances from contaminated water or the like in which stable isotopes (for example, non-radioactive cesium) of radioactive isotopes, which are radioactive substances, are dispersed.

### [Examples]

### (Example 1)

<Magnetic nanoparticle> 7.95 g of ferrous chloride (II) tetrahydrate were dissolved in 8 mL of pure water. Next, 21.62 g of ferric chloride (III) hexahydrate were dissolved in 8 mL of pure water. These were mixed and pure water was added to give a total amount of 50 mL. Then, while this aqueous solution was stirred, ammonia water (25%) was added to thereby obtain magnetic slurry of ferric oxide nanoparticles.

Subsequently, the solution was heated to 90°C by using a temperature controller, an electric stove, or the like, to thereby evaporate ammonia. After that, the solution was left at room temperature and was naturally cooled. Then, the magnetic slurry was precipitated by centrifugal separation (9000 G) to remove the supernatant. The magnetic slurry may be precipitated by a neodymium magnet (0.5 tesla) instead of centrifugal separation.

After that, 100 mL of pure water was added to allow the precipitated magnetic slurry to be redispersed by the bathtub-type ultrasonic disintegrator. Then, the precipitation and redispersion operations were repeatedly performed to thereby wash the magnetic slurry with pure water.

<Coated magnetic nanoparticle> Next, the magnetic slurry, which was obtained by purification using the above-mentioned method, and pure water were used and prepared so that about 0.25 g of iron oxide nanoparticles were contained in 80 mL of pure water. Then, the magnetic nanoparticles contained in this liquid mixture were sufficiently dispersed for about 10 minutes by the bathtub-type ultrasonic disintegrator. Separately, 8 g of poly(diallyldimethylammonium chloride) (manufactured by Sigma-Aldrich Co.; a molecular weight of 100,000 to 200,000) (hereinafter referred to as "PDDA") and 160 mL of pure water were introduced into a beaker and were dispersed for 10 minutes by the bathtub-type ultrasonic disintegrator, thereby preparing a PDDA solution. While this solution was dispersed by the bathtub-type ultrasonic disintegrator, the above-mentioned dispersions of magnetic nanoparticles were added at a speed of about 120 drops per minute.

This liquid mixture was subjected to ultrasonic treatment for 10 minutes by the bathtub-type ultrasonic disintegrator. Then, 30 mL of the liquid mixture were introduced into each of eight centrifuge tubes and subjected to centrifugal separation at 9800 G for 10 minutes. Next, the supernatant was removed and 20 mL of pure water was added and dispersed for 10 minutes by the bathtub-type ultrasonic disintegrator. The above-mentioned treatments including the centrifugal separation, the removal of the supernatant, and the addition and dispersion of 20 mL of pure water for 10 minutes by the bathtub-type ultrasonic disintegrator were repeated three times. Then, the PDDA coated magnetic slurry was dispersed in 80 mL of pure water, thereby obtaining coated magnetic nanoparticles having an intermediate layer formed of PDDA.

<Trapping compound> 21.62 g of ferric chloride (III) hexahydrate were dissolved in 10 mL of pure water, and 300 mg of potassium ferrocyanide were dissolved in 5 mL of pure water. Then, these were mixed to thereby obtain Prussian blue ferric ferrocyanide fine particles. This was subjected to centrifugal separation at 9800 G for 10 minutes to remove the supernatant, and 50 mL of pure water was added and dispersed for 10 minutes by the bathtub-type ultrasonic disintegrator. The above-mentioned treatments including the centrifugal separation, the removal of the supernatant, and the dispersion were performed three times. Ferric ferrocyanide (Prussian blue) obtained as the trapping compound through these processes was dispersed in 20 mL of pure water.

<Magnetic composite particle for decontamination> The dispersions of coated magnetic nanoparticles and the dispersions of trapping compounds were mixed at a ratio of 1:3. Then, the liquid mixture was left at room temperature for 15 minutes, and the magnetic composite particles for decontamination were adsorbed by a 0.5 tesla neodymium magnet, to thereby remove the supernatant. Through these processes, magnetic composite particles for decontamination A having a multilayer structure including an iron oxide nanoparticle, a PDDA intermediate layer, and ferric ferrocyanide were obtained. The dispersions of coated magnetic nanoparticles and the dispersions of trapping compounds were mixed at a mixture ratio of 1:3 in this example, and were also mixed at mixture ratios of 1:1, 1:2, 7:18, 1:4, 1:5, and 1:6. As a result, it was confirmed that the magnetic composite particles for decontamination were obtained in any of these cases. It was also confirmed that excellent particles were obtained especially in the range of 1:3 to 1:4.

Subsequently, the obtained magnetic composite particles for decontamination were subjected to vacuum treatment to about 15 mmHg at room temperature, and were dried by evaporating water, thereby obtaining the dried magnetic composite particles for decontamination A.

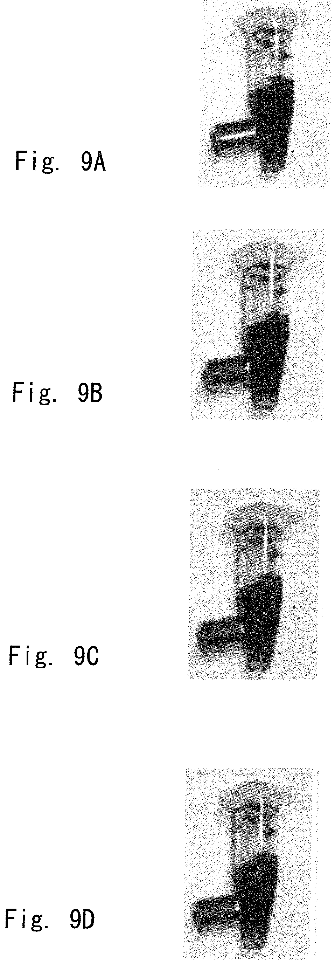

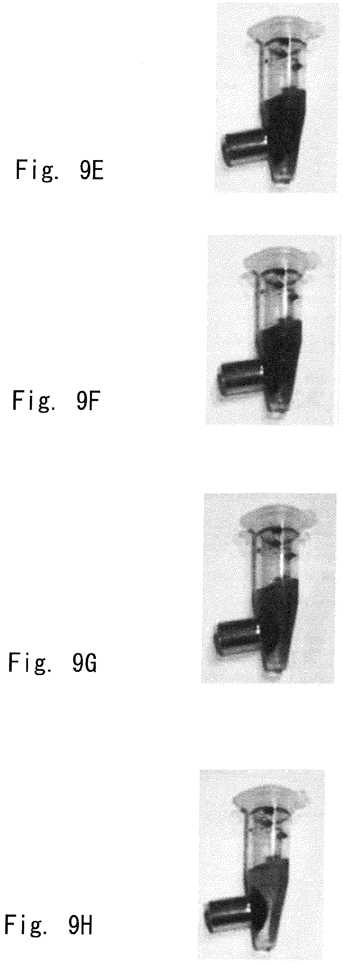

Each of Figs. 9A to 9H shows the state of a change with time of the magnetic accumulation of the magnetic composite particles for decontamination A which are ferric ferrocyanide coated magnetite. Fig. 9A is a photograph taken immediately after the magnetic composite particles for decontamination A were injected into water. Figs. 9B to 9H are photographs obtained by sequentially photographing the state of the magnetic accumulation at intervals of five seconds. As is seen from the figures, the magnetic composite particles for decontamination A are efficiently accumulated on the magnet, which serves as magnetic accumulation means, during a time period of 35 seconds.

### (Example 2)

<Magnetic nanoparticle> 0.02 mol of ferrous chloride (II) (manufactured by Wako Pure Chemical Industries, Ltd.) and 0.04 mol of ferric chloride (III) (manufactured by WAKO Co., Ltd.) were dissolved in 25 mL of pure water. Next, under an argon gas atmosphere, 25 mL of ammonia water (25%) was added to thereby obtain magnetic slurry of black iron oxide nanoparticles. The obtained magnetic slurry was subjected to centrifugal separation at 3000 G for 10 minutes, and was washed ten times with 35 mL of pure water to remove the by-product of ammonium chloride.

<Coated magnetic nanoparticle> Next, the magnetic slurry was redispersed in pure water so as to contain 1 g of magnetic nanoparticles (iron oxide nanoparticles), thereby obtaining 25 mL of solution. Then, 0.01 M of aqueous sodium hydroxide was used to adjust the solution to pH 9.0. The obtained solution is referred to as "dispersions of magnetic nanoparticles". Separately, 0.25 g of PDDA (manufactured by Sigma-Aldrich Co.) were added to pure water to obtain 25 mL of solution. Then, 0.01 M of aqueous sodium hydroxide was used to adjust the solution to pH 9.0. The obtained solution is referred to as "dispersions of intermediate layer forming compounds".

The dispersions of magnetic nanoparticles and the dispersions of intermediate layer forming compounds were mixed for two hours. Into each of two centrifuge tubes, 25 mL of the liquid mixture were introduced, and were subjected to centrifugal separation at 9800 G for 20 minutes. Next, the liquid mixture was washed three times with 35 mL of pure water. Then, the coated magnetic nanoparticles serving as PDDA coated magnetic slurry were obtained. Further, 1 g of the coated magnetic nanoparticles were dispersed in 10 mL of pure water.

<Trapping compound> A solution including 0.04 mol of ferric chloride (III) (manufactured by WAKO Co., Ltd.) and 25 mL of pure water was prepared. On the other hand, 0.01 mol of potassium ferrocyanide were dissolved in 25 mL of pure water. Then, these were mixed to thereby prepare trapping compounds as Prussian blue ferric ferrocyanide fine particles. This was subjected to centrifugal separation at 5000 G for 15 minutes, and was washed five times with 35 mL of pure water to remove excess ferric chloride (III). Further, 3 g of the trapping compounds obtained through these processes were dispersed in 10 mL of pure water. Then, 0.01 M of sodium hydroxide was used to adjust the solution to pH 6.0. The obtained solution is referred to as "dispersions of trapping compounds".

<Magnetic composite particle for decontamination> The dispersions of coated magnetic nanoparticles and the dispersions of trapping compounds were mixed at a ratio of 1:4. Then, the liquid mixture was left at room temperature, and excess ferric ferrocyanide was removed by using a 1.4 tesla neodymium magnet. The purification process was carried out eight times to obtain magnetic composite particles for decontamination B having a multilayer structure including an iron oxide nanoparticle, a PDDA intermediate layer, and ferric ferrocyanide. The dispersions of coated magnetic nanoparticles and the dispersions of trapping compounds were mixed at a mixture ratio of 1:4 in this example, and were also mixed at mixture ratios of 1:1, 1:2, 1:3, 7:18, 1:5, and 1:6. As a result, it was confirmed that the magnetic composite particles for decontamination were obtained in any of these cases. It was also confirmed that excellent particles were obtained especially in the range of 1:3 to 1:4.

Artificial seawater was prepared. Specifically, artificial seawater obtained by dissolving, in 966 mL of pure water, sodium chloride (26.5 g), magnesium chloride (3.26 g), magnesium sulfate (2.07 g), calcium sulfate (1.36 g), and potassium chloride (0.714 g) was prepared. Then, 3 mL of artificial seawater was injected into a vial, and 5 mg of the above-mentioned magnetic composite particles for decontamination were added. The mixture was stirred for 15 minutes, and was then mounted to the outer wall of the vial by using a neodymium magnet (0.64 tesla: manufactured by Niroku seisakusho Co., Ltd.). It was confirmed that, after about 80 seconds, almost all the dispersed magnetic composite particles for decontamination were adsorbed to the inner wall of the vial at the magnet mounted portion.

<Preparation of positive control group> Three types of artificial seawater (3 mL) of pH 4.5, pH 7.0, and pH 9.5, each of which contains 150 ppm of cesium chloride, were prepared. To these samples, 5 mg of Prussian blue, which is a well-known cesium remover, was added and stirred for 15 minutes, and was then subjected to centrifugal separation (manufactured by Hitachi, Ltd.) for three minutes at 15000 G (gravitational acceleration). The cesium chloride concentration in the supernatant of each sample was measured by ICP-MS (manufactured by Shimadzu Corporation). The obtained results are referred to as a positive control group.

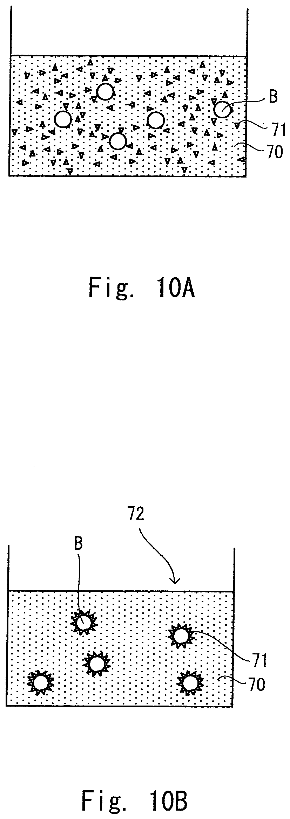

<Trapping and Collection of cesium> First, 5 mg of the magnetic composite particles for decontamination B were added to 3 mL of artificial seawater 70 containing 150 ppm of cesium chloride 71 (see Fig. 10A), and the mixture was stirred for 15 minutes to thereby prepare a sample 72 (see Fig. 10B). Next, a trapping/collecting device 50 was prepared. The trapping/collecting device 50 includes a syringe 51, a magnetic filter 52, and neodymium magnets 53. As the magnetic filter 52, a magnetic filter (manufactured by GIKEN PARTS CO., LTD) obtained by sintering granular SUS430 was used. As the syringe 51, a 2.5 mL disposable syringe (manufactured by TERUMO CORPORATION) was used. A piston portion of the syringe 51 was dismounted and the magnetic filter 52 was mounted in the distal end of the syringe. On an outer wall portion of the syringe at a portion where the magnetic filter 52 was mounted, two neodymium magnets (0.56 tesla, manufactured by Niroku seisakusho Co., Ltd., Kobe) were disposed as the neodymium magnets 53 so as to be horizontally opposed to each other, thereby allowing them to be magnetically adsorbed to each other.

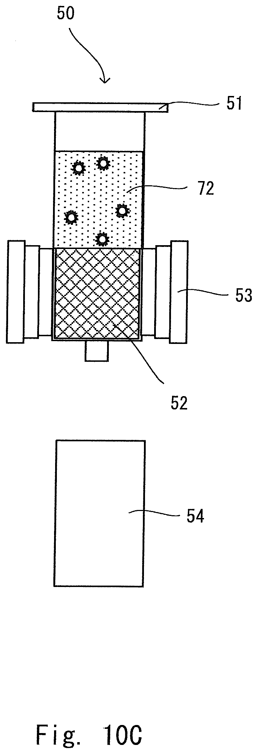

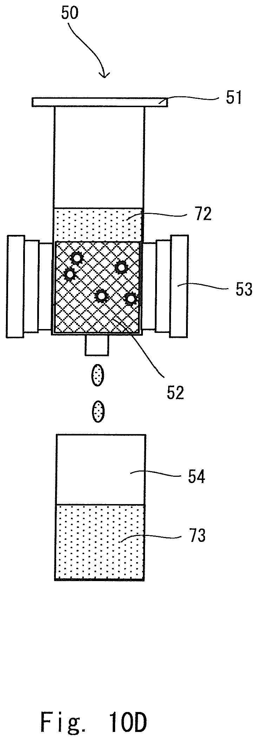

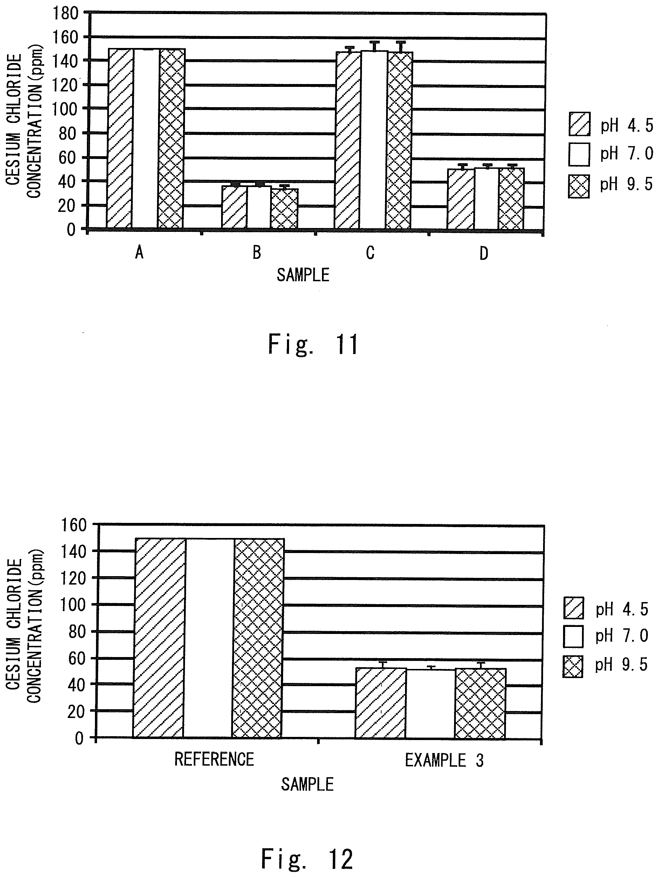

Next, the sample 72 was injected from an inlet portion of the syringe 51 (see Fig. 10C). The injected sample 72 was completely naturally discharged (by gravity) within one minute by the magnetic filter 52 and was sampled in a test tube 54 (see Fig. 10D). As for the color tone, a discharged sample 73 was clear and colorless (after discharge), and it was confirmed that magnetic composite particles for decontamination 61 were removed. Fig. 11 shows the results of measurement of the cesium chloride concentration of the discharged sample 73 by using ICP-MS (manufactured by Shimadzu Corporation). "A" in Fig. 11 shows the result for the artificial water 70 containing 150 ppm of the cesium chloride 71, and "B" in Fig. 11 shows the result for the positive control group obtained by performing centrifugal separation after injecting only the same amount of Prussian blue as that carried by the magnetic composite particles for decontamination B. "C" in Fig. 11 shows the result obtained by injecting the coated magnetic nanoparticles and thereafter collecting them by a magnetic force, and "D" in Fig. 11 shows the result obtained by injecting the magnetic composite particles for decontamination B and thereafter collecting them by a magnetic force. For each sample, three types of samples of the artificial seawater 70 of pH 4.5, pH 7.0, and pH 9.5 were prepared, and the removal rate of the cesium chloride 71 was measured. The results show that the removal rate of the cesium chloride 71 at each PH of a sample D is 84.7 to 86.7% of a sample B of the positive control group. Additionally, it was confirmed that the cesium chloride removal rate at each pH was about the same level in each sample.

(Comparative Example 1) The trapping/collecting device 50 demagnetized by dismounting the neodymium magnets 53, which were disposed so as to be horizontally opposed to each other, from the magnetic filter 52 was prepared. Then, a sample obtained by adding 5 mg of the magnetic composite particles for decontamination B to 3 mL of artificial seawater containing 150 ppm of cesium chloride and stirring them for 15 minutes was injected in the syringe 51 from which the neodymium magnets 53 were dismounted. The injected sample passed through the magnetic filter 52 and was completely naturally discharged within one minute. It was confirmed that the color tone of the discharged sample remained dark blue which was the same as that before discharge.

(Example 3) Removal of cesium from 150 mL of artificial seawater was attempted by using the magnetic composite particles for decontamination B and magnetism. In 300 mL beakers made of glass, 150 mL of artificial seawater containing 150 ppm of cesium chloride were prepared. To each beaker, 250 mg of the magnetic composite particles for decontamination B, which were prepared by the method described above, were added and stirred for 15 minutes. After that, a magnet bar (1 tesla: manufactured by Niroku seisakusho Co., Ltd.) composed of a neodymium magnet was inserted, and then the mixture was stirred (40% of a maximum amplitude, output of 40% of a maximum rotation speed) by using a wave mixer (WEB-30; manufactured by AS ONE Corporation, Osaka). After five minutes, the cesium chloride concentration was measured by ICP-MS (manufactured by Shimadzu Corporation). As a result, as shown in Fig. 12, the cesium chloride concentration of three types of artificial seawater of pH 4.5, pH 7.0, and pH 9.5 was able to be reduced to 35 to 35.6% as compared with the concentration (150 ppm) before the treatment.

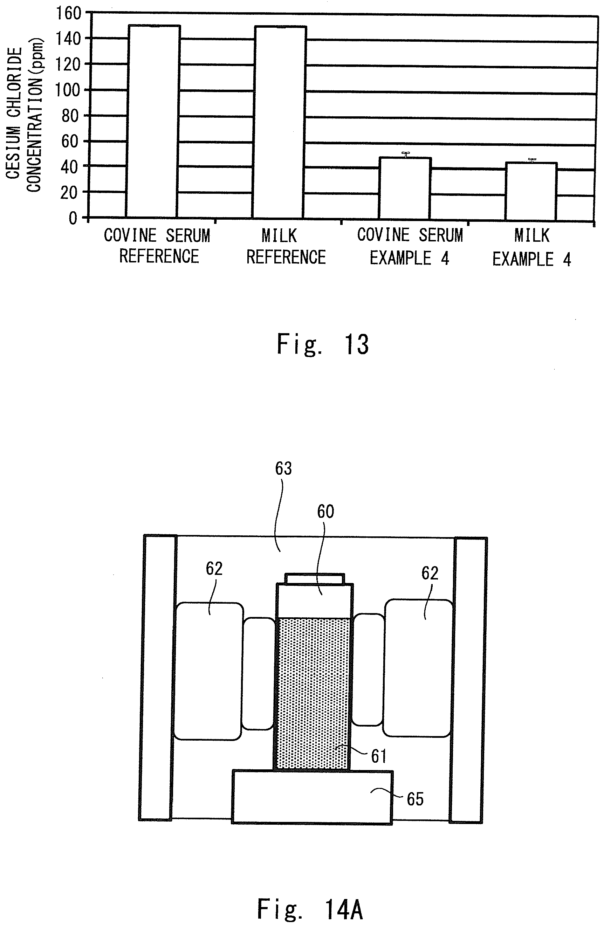

(Example 4) Removal of cesium from bovine serum and milk was attempted by using the magnetic composite particles for decontamination B and magnetism. In 50 mL conical tubes, 45 mL of bovine serum and 45 mL of milk, each of which contains 150 ppm of cesium chloride, were prepared. To each tube, 75 mg of magnetic composite particles for decontamination were added and stirred for 15 minutes. After that, each conical tube was mounted in a magnetic circuit (1.4 tesla: HINODE PIPE COMPANY LIMITED.) composed of a neodymium magnet and a yoke. After five minutes, the cesium chloride concentration was measured by ICP-MS (manufactured by Shimadzu Corporation). As a result, as shown in Fig. 13, it was confirmed that the cesium chloride concentration was reduced to 32.5 to 30.5% of the reference (150 ppm) before the treatment.

(Example 5) <Trapping compound> 1 g of illite granule were sufficiently ground with a mortar. The obtained 0.5 g of illite powder were added to 50 mL of pure water contained in a 50 mL conical tube made of polypropylene and were sufficiently stirred. After the mixture was placed in a stationary state for five minutes, 5 mL of supernatant was sampled. When the grain size and the zeta potential were measured, it was confirmed that the grain size was about 120 nm and the zeta potential was -20 to -30 mV (pH 4 to 10).

The sampled 2 mL of illite powder dispersion was subjected to centrifugal separation at 9000 G, and the supernatant was removed while the precipitated illite powder was left. Then, the illite powder was dried by a centrifugal dryer (centrifuge + vacuum device). The obtained 0.1 g of illite powder were dispersed in 5 mL of pure water, and were adjusted to pH 6 by adding a small amount of 0.1 M hydrochloric acid.

<Magnetic composite particle for decontamination> 0.2 g of coated magnetic nanoparticles having an intermediate layer formed of PDDA, which was synthesized by a process similar to Example 1, were dispersed in 5 mL of pure water, and were adjusted to pH 6 by adding a small amount of 0.1 M hydrochloric acid. The obtained 5 mL of illite dispersion were transferred to a 50 mL conical tube made of polypropylene, and 5 mL of the prepared dispersions of coated magnetic nanoparticles were dripped little by little for three minutes, while being constantly dispersed in a bath-type sonicator (manufactured by AS ONE Corporation), and were sufficiently mixed with the dispersions of trapping compounds, which were illite dispersions, while being stirred as appropriate. Further, in the sonicator, the mixture was reacted for 15 minutes while being stirred as appropriate. After that, the mixture was subjected to centrifugal separation at 3000 G for five minutes, and the supernatant was removed while the precipitation was left. To the obtained precipitate, 1 mL of pure water were added and stirred by vortex treatment, and were then dispersed in the sonicator, thereby obtaining dispersions of magnetic composite particles for decontamination C having a multilayer structure including an iron oxide nanoparticle, a PDDA intermediate layer, and illite.

When the zeta potential of the obtained dispersions (pH 4 to 10) of the magnetic composite particles for decontamination C was measured, the result showed about -20 mV. It was confirmed that PDDA coated magnetic nanoparticles exhibiting positive charges were singly covered with illite exhibiting negative charges. It was confirmed in Example 5 that the stable magnetic composite particles for decontamination C were formed in a wide region of pH 4 to 10.

(Example 6) <Coated magnetic nanoparticle> 0.1 g of α-iron powder (manufactured by Furuuchi Chemical Corporation) were put into a polypropylene tube having a capacity of 15 mL under an argon gas atmosphere. Further, an aqueous solution containing 10 mL of 10% ammonia water and 2% PDDA was introduced into a tube and sufficiently stirred. After that, the aqueous solution was treated for five minutes in a bath-type ultrasonic disintegrator while being occasionally stirred in the tube. Next, 300 µL of the solution was put into the tube and was subjected to centrifugal separation at 12000 G for one minute. After that, the supernatant was removed and 2 mL of pure water was added, and was then sufficiently dispersed by vortex ultrasonication. Subsequently, centrifugal separation was carried out at 12000 G for one minute. After the supernatant was removed, 110 µL of pure water were added and sufficiently dispersed by vortex ultrasonication, thereby obtaining dispersions of coated magnetic nanoparticles by using PDDA as an intermediate layer and α-iron as magnetic nanoparticles.

<Magnetic composite particle for decontamination> Next, 20 µL of dispersions of coated magnetic nanoparticles (PDDA coated α-iron) were added five times (100 µL in total of dispersions of coated magnetic nanoparticles) to 240 µL of dispersions (pH 2.5) containing 2 mg of trapping compounds (Prussian blue) obtained in Example 1. Every time the dispersions were added, the dispersions were subjected to ultrasonic treatment for five seconds and stirred by vortex for five seconds. Through these operations, dispersions of magnetic composite particles for decontamination D including, in the magnetic nanoparticle, Prussian blue, an intermediate layer, and α-iron.

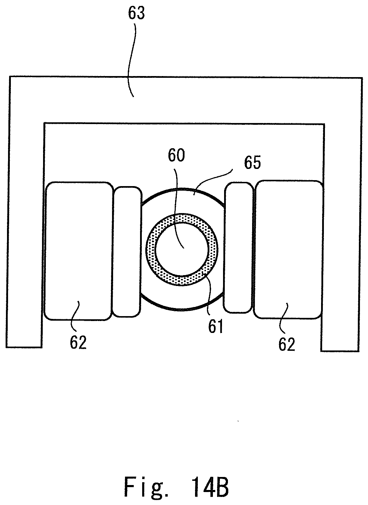

Next, the above-mentioned artificial seawater (2 mL) of pH 7 containing 10 ppm of cesium chloride was prepared in a glass vial 60 having a capacity of 3.5 mL. Then, dispersions containing 1.2 mg of the magnetic composite particles for decontamination D were added and gently stirred for five minutes. Next, the glass vial 60 was installed on a base 65 of a magnetism exposure device. Fig. 14A is a side view of the state in which the glass vial is installed in the magnetism exposure device, and Fig. 14B is a top view thereof. Specifically, magnetisms 62 were installed in the vicinity of both sides of the glass vial 60, and a U-shaped yoke 63 was disposed on the outside of the magnetisms 62. The magnetisms 62 were installed such that the S pole and the N pole of square magnets of 0.4 tesla were opposed to each other.

It was confirmed, by visually observing the transparency of the solution, that the magnetic composite particles for decontamination D were completely adsorbed to the magnet portion after eight seconds from the installation of the magnets. After 15 seconds from the installation of the magnets, 500 µL of clear liquid at the center were collected. Then, the cesium chloride concentration was measured by ICP-MS (manufactured by Shimadzu Corporation). As a result, it turned out that the cesium chloride concentration was less than 1 ppb which was equal to or less than a detection limit.

(Example 7) <Trapping compound> An experiment was conducted in a similar manner except that zeolite was used as trapping compounds instead of illite used in Example 5 described above. Specifically, 1 g of zeolite granule were sufficiently ground with a mortar. The obtained 0.5 g of zeolite powder were added to 50 mL of pure water contained in a 50 mL conical tube made of polypropylene, and were sufficiently stirred. After the mixture was placed in a stationary state for five minutes, 5 mL of supernatant was sampled. When the grain size and the zeta potential were measured, the grain size was about 200 nm and the zeta potential was -35 to -50 mV (pH 4 to 10).

The sampled 2 mL of zeolite powder dispersions (dispersions of trapping compounds) were subjected to centrifugal separation at 9000 G, and the supernatant was removed while the precipitated zeolite powder was left. Then, the zeolite powder was dried by a centrifugal dryer (centrifuge + vacuum device). The obtained 0.1 g of zeolite powder were dispersed in 5 mL of pure water and were adjusted to pH 7 by adding a small amount of 0.1M hydrochloric acid. On the other hand, 0.2 g of coated magnetic nanoparticles (coated magnetic nanoparticles) having PDDA as an intermediate layer were dispersed in 5 mL of pure water and were adjusted to pH 7 by adding a small amount of 0.1M hydrochloric acid.

The obtained 5 mL of dispersions of trapping compounds (zeolite) were transferred to a 50 mL conical tube made of polypropylene and were put into a bath-type sonicator (manufactured by AS ONE Corporation). While the dispersions were constantly dispersed, 5 mL of dispersions of coated magnetic nanoparticles having PDDA as an intermediate layer were dripped little by little for three minutes, and were mixed with the dispersions of trapping compounds while being stirred as appropriate. Further, the dispersions were reacted for 15 minutes while being stirred as appropriate in the sonicator. After that, centrifugal separation was carried out at 3000 G for five minutes, and the supernatant was discarded. By adding 1 mL of pure water to the obtained precipitant, stirring the dispersions by vortex treatment, and dispersing the dispersions in the sonicator, dispersions of magnetic composite particles for decontamination E were obtained.

When the zeta potential of the dispersions (pH 4 to 10) of the obtained magnetic composite particles for decontamination E was measured, the result showed about -30 to -40 mV. It was confirmed that PDDA coated magnetic nanoparticles exhibiting positive charges were singly covered with zeolite exhibiting negative charges. It was confirmed in Example 7 that the stable magnetic composite particles for decontamination E were formed in a wide region of pH 4 to 10.

(Example 8) Next, a description is made of an example in which the dispersions of trapping compounds (zeolite) according to Example 7 were used after hydrothermal treatment and washing with pure water. The procedure of sufficiently grinding 1 g of zeolite granule with a mortar, adding 0.5 g of zeolite powder to pure water, and sampling 5 mL of supernatant was carried out in a similar manner to Example 7 described above. Next, 5 mL of the sampled supernatant was put into a high-pressure container for supercritical experiment having a capacity of 11 mL (manufactured by TAIATSU TECHNO CORPORATION) while the supernatant was sufficiently stirred.

Then, the screw cap of the high-pressure container was hermetically sealed with a torque of 120 Nm, and hydrothermal treatment was carried out at 400°C for two hours. After the contents were cooled, the contents were taken out and put into a 50 mL tube made of polypropylene, and 45 mL of pure water was added and centrifugal separation was carried out at 7000 G for 15 minutes. Next, the supernatant was discarded and 50 mL of pure water was added and sufficiently stirred. Then, hydrothermally-treated zeolite was dispersed. Centrifugal separation was carried out again at 7000 G for 15 minutes and a precipitant was obtained. This process was repeated three times, and hydrothermally-treated zeolite was washed with pure water. When the grain size and the zeta potential of the hydrothermally-treated zeolite powder dispersions obtained after the above-mentioned process were measured, the grain size was 150 to 300 nm and the zeta potential was -30 to -55 mV (pH 4 to 10).

After that, the sampled 2 mL of hydrothermally-treated zeolite powder dispersions were subjected to centrifugal separation at 9000 G, and dispersions of magnetic composite particles for decontamination F were obtained by a method similar to Example 7.

When the zeta potential of the obtained dispersions (pH 4 to 10) of the magnetic composite particles for decontamination F was measured, the result showed about -30 to -40 mV. It was confirmed that PDDA coated magnetic nanoparticles exhibiting positive charges were singly covered with hydrothermally-treated zeolite exhibiting negative charges. It was confirmed in Example 8 that the stable magnetic composite particles for decontamination F were formed in a wide region of pH 4 to 10.

(Example 9) The cesium adsorption ability of zeolite alone of Example 7 was compared with that of hydrothermally-treated zeolite alone of Example 8. It was confirmed by ICP-MS that the hydrothermally-treated zeolite of Example 8 has a cesium adsorption ability which is about twice as much per unit weight as that of zeolite of Example 7, and the magnetic composite particles for decontamination covered with the hydrothermally-treated zeolite of Example 8 have a cesium adsorption ability which is about twice as much per unit weight as that of the magnetic composite particles for decontamination covered with zeolite of Example 7.

(Example 10) [Process a1 (coated magnetic nanoparticle)] A tube having a capacity of 50 mL was prepared, and 1.4 g of magnetic slurry of magnetic nanoparticles (iron oxide nanoparticles) obtained by the method of Example 1 were dispersed in ammonia water with a 1/9 concentration (4 mL of ammonia water, 32 mL of distilled water). After 4 ml of PDDA solution (20% (weight%) aqueous solution) were added, the solution was sufficiently stirred and dispersed by the bathtub-type ultrasonic disintegrator. The inversion and mixing of this liquid mixture was repeated for two hours. Then, the liquid mixture was subjected to centrifugal separation at 3000 G for 10 minutes by using a bucket centrifuge. Next, the supernatant was removed and 20 mL of pure water were added. After the mixture was completely dispersed, 25 mL of distilled water were added and mixed. Then, centrifugal separation was carried out at 18,000 G for 15 minutes by using a ultracentrifuge, and the supernatant was removed. Next, 20 mL of distilled water were added, and the mixture was completely dispersed. After that, 25 mL of distilled water were added and mixed. Then, centrifugal separation was carried out at 19,000 G for 30 minutes by using a ultracentrifuge, and the supernatant was removed. After that, distilled water was added to give a total amount of 14 mL, and the mixture was completely dispersed and then subjected to argon gas replacement.

Table 1 shows the results obtained by measuring, for synthesized magnetic nanoparticles and coated magnetic nanoparticles, the zeta potential (mV) in each solution in the range of pH 4.0 to pH 10.0 by using a zeta potentiometer. It was confirmed that the coated magnetic nanoparticles exhibited positive charges at any pH.

**[Table 1]**

| | pH4.0 (mV) | pH6.0 (mV) | pH8.0 (mV) | pH10.0 (mV) |
|---|---|---|---|---|
| magnetic nanoparticles (magnetite) | 24.09 | 14.01 | -16.54 | -27.17 |
| coated magnetic nanoparticles (PDDA coated magnetite) | 43.45 | 42.88 | 38.35 | 33.33 |

[Process b1 (dispersions of trapping compounds)] 3 mL of ferric chloride aqueous solution (2.43 mol/L) were added to 45 mL of distilled water and mixed. Next, 12 mL of aqueous solution (0.5 mol/L) containing potassium ferrocyanide trihydrate were added and mixed, thereby obtaining dispersions of Prussian blue. This was subjected to centrifugal separation at 19000 G for 30 minutes to remove the supernatant, and was sucked out overnight by a vacuum pump and dried completely. As a result, 2.19 g of Prussian blue (ferric ferrocyanide) serving as trapping compounds were obtained. The pH of the obtained dispersions of trapping compounds was 5.48, and the zeta potentials obtained after the pH adjustment were as follows. pH 4.0: -24.77 mV, pH 5.0: -25.07 mV, pH 6.0: -27.93 mV

[Process cl (magnetic composite particle for decontamination)] While 40 mL of the dispersions of trapping compounds (ferric ferrocyanide) obtained in the process b1 were stirred, 10 mL of the coated magnetic nanoparticles obtained in the process a1 were added drop by drop and completely mixed. Through these processes, magnetic composite particles for decontamination G1 having a multilayer structure including an iron oxide nanoparticle, a PDDA intermediate layer, and ferric ferrocyanide were obtained.

(Example 11) [Process c2] A probe of an ultrasonic disintegrator was inserted into a container containing 40 mL of the dispersions of trapping compounds obtained in the process b1. Then, 10 mL of the coated magnetic nanoparticles obtained in the process a1 were added drop by dopy and completely mixed by ultrasonic irradiation. Through these processes, magnetic composite particles for decontamination G2 having a multilayer structure including an iron oxide nanoparticle, a PDDA intermediate layer, and ferric ferrocyanide were obtained.

(Example 12) [Process c3] Magnetic composite particles for decontamination G3 were synthesized using the mixing/stirring device 100 shown in Figs. 15A to 15E. First, in the container 110, 40 mL of the dispersions of trapping compounds obtained in the process b1 were stirred by the stirring means 105, and 2 mL of the coated magnetic nanoparticles obtained in the process a1 were added, stirred, and mixed (see Fig. 15A). Next, the contents of the container 110 were forcibly transferred to the container 120 (see Fig. 15B). After that, the contents of the container 120 were forcibly transferred to the static mixer 102 (manufactured by Noritake Co., Ltd.) by the piston 101 (see Fig. 15C).

The contents of the static mixer 102 were press-fit into the inlet B of the micromixer 130 through the tube pump 103. As a result, the liquid discharged from the outlet C of the micromixer 130 started to accumulate in the container 110 (see Fig. 15D). Next, the contents of the container 110 were press-fit into the inlet A of the micromixer 130 by the tube pump 104. As a result, the liquid press-fit into the inlet A and the inlet B of the micromixer 130 was mixed and discharged from the outlet C. After these operations were continuously performed, the container 110 was filled up and the container 120 was emptied (see Fig. 15E). These series of operations were repeated five times (2 mL of the coated magnetic nanoparticles obtained in the process a1 were used five times). Through these processes, the magnetic composite particles for decontamination G3 having a multilayer structure including an iron oxide nanoparticle, a PDDA intermediate layer, and ferric ferrocyanide were obtained. The pH of the obtained dispersions of the magnetic composite particles for decontamination G3 was 5.57, and the zeta potentials obtained after the pH adjustment were as follows.
pH 4.0: -24.91 mV, pH 5.0: -26.34 mV, pH 6.0: -28.85 mV

(Example 13) [Process c4] Magnetic composite particles for decontamination G4 were synthesized by using the reaction/mixing device 200 according to the second modified example shown in Figs. 16A to 16D. First, 40 mL of the dispersions of trapping compounds obtained in the process b1 were preliminarily sucked into the first syringe 210 and the second syringe 220 was emptied. Further, 10 mL of the coated magnetic nanoparticles obtained in the process a1 were preliminarily sucked into the third syringe (not shown) for injecting the dispersions of coated magnetic nanoparticles.

Next, the piston 223 of the second syringe 220 was pulled, and a half amount (20 mL) of the dispersions of trapping compounds obtained in the process b1 was sucked from the first syringe 210. After that, the channel between the second syringe 220 and the third syringe was opened through operation of the three-way stopcock, and 20 mL of the dispersions of coated magnetic nanoparticles were transferred from the third syringe to the second syringe 220 by suction under negative pressure (Process A).

Subsequently, the three-way stopcock 202 was operated and the piston 213 of the first syringe 210 was rapidly pulled to a maximum extent by using the first syringe control mechanism 212, thereby allowing 22 mL of the liquid mixture of the second syringe 220 (2 mL of coated magnetic nanoparticles obtained in process a1 + a half amount (20 mL) of the dispersions of trapping compounds obtained in process b1) to pass through a narrow space of the microchannel (manufactured by ibidi, microslide 6 flow-through) 201 and allowing the total amount of the liquid to be transferred to the first syringe 210 (see Fig. 16A). After that, as described in the second modified example, the total amount of the liquid mixture was transferred between the first syringe 210 and the second syringe 220 and was transferred through the microchannel 201 disposed therebetween. Subsequently, the residual dispersions of coated magnetic nanoparticles and the residual dispersions of trapping compounds were injected from the third syringe and the fourth syringe, respectively, and were mixed. Through these processes, the magnetic composite particles for decontamination G4 were obtained.

(Example 14) [Process c5] Magnetic composite particles for decontamination G5 were obtained in a similar manner to Example 13 except that a mixing needle having a narrow opening area was used instead of the microchannel 201.

(Example 15) [Process c6] Magnetic composite particles for decontamination G6 were obtained in a similar manner to Example 13 except that an elongated hard tube was used instead of the microchannel 201.

(Example 46) Magnetic composite particles for decontamination M1 were obtained in a similar manner to Example 10 except that the following process was applied instead of the process b1. [Process b7] 6 mL of aqueous solution (0.49 mol/L) containing copper sulfate pentahydrate were added to 39 mL of distilled water and were mixed. Next, 3 mL of aqueous solution (2.43 mol/L) containing ferric chloride hexahydrate were added and mixed. After that, 12 mL of aqueous solution (0.5 mol/L) containing potassium ferrocyanide trihydrate were added and mixed, thereby obtaining dispersions of copper ferrocyanide/Prussian blue. This was subjected to centrifugal separation at 19,000 G for 30 minutes to remove the supernatant, and was sucked out overnight by a vacuum pump and completely dried, thereby obtaining 2.49 g of copper ferrocyanide/Prussian blue as trapping compounds. The pH of the obtained dispersions of trapping compounds was 4.60, and the zeta potentials obtained after the pH adjustment were as follows.
pH 4.0: -6.64 mV, pH 5.0: -14.64 mV, pH 6.0: -22.13 mV

Then, 50 µL of the dispersions of the magnetic composite particles for decontamination M1 obtained in Example 46 were added to 2.5 mL of pure water, and the dispersion was sufficiently stirred and put into the magnetism exposure device used in Example 6 (see Figs. 14A and 14B). As a result, it was confirmed that the magnetic composite particles for decontamination M1 coated with α-iron, PDDA coating, and copper ferrocyanide (copper sulfate derived)/Prussian blue were well magnetically-separated after 15 seconds. Specifically, it was confirmed that the transmittance of the black-colored sample gradually increased immediately after the installation in the magnetism exposure device, and the sample became transparent, except for the vicinity of the magnet, after 15 seconds.

(Examples 47 to 51) Magnetic composite particles for decontamination M2 according to Example 47 were obtained by a method similar to Example 11 except that the process b1 was replaced by the process b7. Similarly, composite particles for decontamination M3 according to Example 48, composite particles for decontamination M4 according to Example 49, composite particles for decontamination M5 according to Example 50, and composite particles for decontamination M6 according to Example 51 were obtained by methods similar to Examples 12 to 15, respectively, except that the process b1 was replaced by the process b7.

(Example 52) Magnetic composite particles for decontamination N1 were obtained in a similar manner to Example 10 except that the following process was applied instead of the process b1. [Process b8] 6 mL of aqueous solution containing copper chloride dihydrate (0.49 mol/L) were added to 39 mL of distilled water and were mixed. Next, 3 mL of aqueous solution (2.43 mol/L) containing ferric chloride hexahydrate were added and mixed. After that, 12 mL of aqueous solution (0.5 mol/L) containing potassium ferrocyanide trihydrate was added and mixed, thereby obtaining dispersions of copper ferrocyanide/Prussian blue. This was subjected to centrifugal separation at 19000 G for 30 minutes to remove the supernatant, and was sucked out overnight by a vacuum pump and completely dried, thereby obtaining 2.33 g of copper ferrocyanide/Prussian blue as trapping compounds. The pH of the obtained dispersions of trapping compounds was 4.48, and the zeta potentials obtained after the pH adjustment were as follows.
pH 4.0: -4.05 mV, pH 5.0: -13.34 mV, pH 6.0: -19.59 mV

(Examples 53 to 57) Magnetic composite particles for decontamination N2 according to Example 53 were obtained by a method similar to Example 11 except that the process b1 was replaced by the process b8. Similarly, composite particles for decontamination N3 according to Example 43, composite particles for decontamination N4 according to Example 55, composite particles for decontamination N5 according to Example 56, and composite particles for decontamination N6 according to Example 57 were obtained by methods similar to Examples 12 to 15, respectively, except that the process b1 was replaced by the process b8.

(Example 58) Magnetic composite particles for decontamination P1 were obtained in a similar manner to Example 10 except that the following process was applied instead of the process b1. [Process b9] 6 mL of aqueous solution (0.49 mol/L) containing nickel sulfate hexahydrate were added to 39 mL of distilled water and were mixed. Next, 3 mL of aqueous solution (2.43 mol/L) containing ferric chloride hexahydrate were added and mixed. After that, 12 mL of aqueous solution (0.5 mol/L) containing potassium ferrocyanide trihydrate were added and mixed, thereby obtaining dispersions of nickel ferrocyanide/Prussian blue. This was subjected to centrifugal separation at 19000 G for 30 minutes to remove the supernatant, and was sucked out overnight by a vacuum pump and completely dried, thereby obtaining 2.59 g of nickel ferrocyanide/Prussian blue as trapping compounds. The pH of the obtained trapping compounds was 4.70, and the zeta potentials obtained after the pH adjustment were as follows. pH 4.0: -2.37 mV, pH 5.0: -10.64 mV, pH 6.0: -15.06 mV

(Examples 59 to 63) Magnetic composite particles for decontamination P2 according to Example 59 were obtained in a similar manner to Example 11 except that the process b1 was replaced by the process b9. Similarly, composite particles for decontamination P3 according to Example 60, composite particles for decontamination P4 according to Example 61, composite particles for decontamination P5 according to Example 62, and composite particles for decontamination P6 according to Example 63 are obtained by methods similar to Examples 12 to 15, respectively, except that the process b1 was replaced by the process b9.

(Example 64) Magnetic composite particles for decontamination Q1 were obtained in a similar manner to Example 10 except that the following process was applied instead of the process b1. [Process b10] 6 mL of aqueous solution (0.49 mol/L) containing cobalt sulfate heptahydrate were added to 39 mL of distilled water and were mixed. Next, 3 mL of aqueous solution (2.43 mol/L) containing ferric chloride hexahydrate was added and mixed. After that, 12 mL of aqueous solution (0.5 mol/L) containing potassium ferrocyanide trihydrate were added and mixed, thereby obtaining dispersions of cobalt ferrocyanide/Prussian blue. This was subjected to centrifugal separation at 19000 G for 30 minutes to remove the supernatant, and was sucked out overnight by a vacuum pump and completely dried, thereby obtaining 2.49 g of cobalt ferrocyanide/Prussian blue as trapping compounds. The pH of the obtained dispersions of trapping compounds was 4.73, and the zeta potentials obtained after the pH adjustment were as follows.
pH 4.0: -8.83 mV, pH 5.0: -15.24 mV, pH 6.0: -17.30 mV

(Examples 65 to 69) Magnetic composite particles for decontamination Q2 according to Example 65 were obtained by a method similar to Example 11 except that the process b1 was replaced by the process b10. Similarly, composite particles for decontamination Q3 according to Example 66, composite particles for decontamination Q4 according to Example 67, composite particles for decontamination Q5 according to Example 68, and composite particles for decontamination Q6 according to Example 69 were obtained by methods similar to Examples 12 to 15, respectively, except that the process b1 was replaced by the process b10.

(Example 70) Magnetic composite particles for decontamination R1 were obtained in a similar manner to Example 10 except that the following process was applied instead of the process b1. [Process b11] 6 mL of aqueous solution (0.49 mol/L) containing zinc sulfate heptahydrate were added to 39 mL of distilled water and were mixed. Next, 3 mL of aqueous solution (2.43 mol/L) containing ferric chloride hexahydrate were added and mixed. After that, 12 mL of aqueous solution (0.5 mol/L) containing potassium ferrocyanide trihydrate were added and mixed, thereby obtaining dispersions of zinc ferrocyanide/Prussian blue. This was subjected to centrifugal separation at 19000 G for 30 minutes to remove the supernatant, and was sucked out overnight by a vacuum pump and completely dried, thereby obtaining 2.53 g of zinc ferrocyanide/Prussian blue trapping compounds. The pH of the obtained dispersions of trapping compounds was 4.81, and the zeta potentials obtained after the pH adjustment were as follows. pH 4.0: -5.68 mV, pH 5.0: -12.05 mV, pH 6.0: -21.12 mV

(Examples 71 to 75) Magnetic composite particles for decontamination R2 according to Example 71 were obtained by a method similar to Example 11 except that the process b1 was replaced by the process b 11. Similarly, composite particles for decontamination R3 according to Example 72, composite particles for decontamination R4 according to Example 73, composite particles for decontamination R5 according to Example 74, and composite particles for decontamination R6 according to Example 75 were obtained by methods similar to Examples 12 to 15, respectively, except that the process b1 was replaced by the process b11.

(Example 76) Magnetic composite particles for decontamination S1 were obtained in a similar manner to Example 10 except that the following process was applied instead of the process b1. [Process b12] 6 mL of aqueous solution (0.49 mol/L) containing ferrous sulfate (divalent) heptahydrate were added to 39 mL of distilled water and were mixed. Next, 3 mL of aqueous solution (2.43 mol/L) containing ferric chloride hexahydrate were added and mixed. After that, 12 mL of aqueous solution (0.5 mol/L) containing potassium ferrocyanide trihydrate were added and mixed, thereby obtaining dispersions of Prussian blue. This was subjected to centrifugal separation at 19000 G for 30 minutes to remove the supernatant, and was sucked out overnight by a vacuum pump and completely dried, thereby obtaining 2.44 g of Prussian blue as trapping compounds. The pH of the obtained trapping compounds was 4.91, and the zeta potentials obtained after the pH adjustment were as follows.
pH 4.0: -9.48 mV, pH 5.0: -16.94 mV, pH 6.0: -22.68 mV

(Examples 77 to 81) Magnetic composite particles for decontamination S2 according to Example 77 were obtained by a method similar to Example 11 except that the process b1 was replaced by the process b12. Similarly, composite particles for decontamination S3 according to Example 78, composite particles for decontamination S4 according to Example 79, composite particles for decontamination according to Example 80, and composite particles for decontamination according to Example 81 were obtained by methods similar to Examples 12 to 15, respectively, except that the process b1 was replaced by the process b 12.

(Examples 82 to 153) Magnetic composite particles for decontamination were obtained in a similar manner to Examples 10 to 15 and 46 to 81 except that the following process was applied instead of the process a1. Assume that the magnetic composite particles for decontamination according to Examples 82 to 87 and 118 to 153 respectively correspond to the processes of Examples 10 to 15 and 46 to 81.
Examples 82 to 87: Magnetic composite particles for decontamination T1 to T6
Examples 118 to 123: Magnetic composite particles for decontamination Z1 to Z6
Examples 124 to 129: Magnetic composite particles for decontamination AA1 to AA6
Examples 130 to 135: Magnetic composite particles for decontamination AB1 to AB6
Examples 136 to 141: Magnetic composite particles for decontamination AC1 to AC6
Examples 142 to 147: Magnetic composite particles for decontamination AD1 to AD6
Examples 148 to 153: Magnetic composite particles for decontamination AE1 to AE6

[Process a2] A tube having a capacity of 50 mL was prepared and 1.4 g of α-iron powder having an oxide layer were dispersed in ammonia water (4 mL of ammonia water + 32 mL of distilled water) with a 1/9 concentration. After 4 ml of PDDA solution (20% (weight%) aqueous solution) were added, the solution was sufficiently stirred and dispersed by the bathtub-type ultrasonic disintegrator. The inversion and mixing of the liquid mixture were repeated for two hours. Then, centrifugal separation was carried out at 3000 G for 10 minutes by using a bucket centrifuge. Next, the supernatant was removed and 20 mL of pure water was added and dispersed for 10 minutes by the bathtub-type ultrasonic disintegrator. After the centrifugal separation, the supernatant was removed and 20 mL of pure water was added and completely dispersed. After that, 25 mL of distilled water was added and mixed. Next, centrifugal separation was carried out at 19,000 G for 30 minutes by using an ultracentrifuge, and the supernatant was removed. After that, distilled water was added to give a total amount of 14 mL and was completely dispersed, and was then subjected to argon gas replacement.

Table 2 shows the results obtained by measuring, for the synthesized magnetic nanoparticles and coated magnetic nanoparticles, the zeta potential (mV) in each solution in the range of pH 4.0 to pH 10.0 by using a zeta potentiometer. It was confirmed that the coated magnetic nanoparticles exhibited positive charges at each pH.

**[Table 2]**

| | pH4.0 (mV) | pH6.0 (mV) | pH8.0 (mV) | pH10.0 (mV) |
|---|---|---|---|---|
| magnetic nanoparticles (α-iron) | 26.94 | 17.67 | -13.17 | -22.73 |
| coated magnetic nanoparticles (PDDA coated α-iron) | 46.17 | 47.03 | 45.51 | 32.74 |

Table 3 shows the pH of each of the dispersions of the magnetic composite particles for decontamination obtained in the process c3, and the zeta potentials obtained after the pH adjustment.

**[Table 3]**

| | magnetic composite particles for decontamination | pH4.0 | pH5.0 | pH6.0 | pH of dispersion obtained by synthesis |
|---|---|---|---|---|---|
| | | mV | mV | mV | |
| Example 12 | G3 | -24.91 | -26.34 | -28.85 | 5.57 |
| Example 48 | M3 | -9.83 | -16.42 | -21.5 | 4.65 |
| Example 54 | N3 | -7.97 | -14.87 | -21.96 | 4.57 |
| Example 60 | P3 | -10.87 | -14.11 | -18.60 | 4.58 |
| Example 66 | Q3 | -9.86 | -14.15 | -18.61 | 4.63 |
| Example 72 | R3 | -9.44 | -17.5 | -23.43 | 4.74 |
| Example 78 | S3 | -7.82 | -13.51 | -22.37 | 5.02 |
| Example 84 | T3 | -28.51 | -19.94 | -21.63 | 5.53 |
| Example 120 | Z3 | -9.47 | -16.34 | -19.04 | 4.88 |
| Example 126 | AA3 | -5.08 | -16.92 | -18.25 | 4.78 |
| Example 132 | AB3 | -10.10 | -15.57 | -17.74 | 4.77 |
| Example 138 | AC3 | -13.87 | -19.19 | -17.25 | 4.72 |
| Example 144 | AD3 | -17.34 | -19.44 | -22.98 | 4.86 |
| Example 150 | AE3 | -8.96 | -15.28 | -22.26 | 4.98 |

(Example 154) The process a1 was carried out to obtain coated magnetic nanoparticles. [Process b13 (dispersions of chitin nanofiber)] Distilled water was added to 4 g of chitin nanofiber (10% concentration, manufactured by SUGINO MACHINE LIMITED) to give a total amount of 40 mL and was sufficiently dispersed.

### [Process c7 (synthesis of magnetic composite particles for decontamination)]

Magnetic composite particles for decontamination AF1 were obtained in a similar manner to the process c1 except that the amount of coated magnetic nanoparticles was one-tenth (1 mL in total) at each stage.

(Example 155) Magnetic composite particles for decontamination AF2 were obtained by a method similar to Example 154 except that a process c8 was applied instead of the process c7. [Process c8] The process was carried out in a similar manner to the process c2 except that the amount of coated magnetic nanoparticles to be added (at each stage) was one-tenth (1 mL in total) of that of the process c2.

(Example 156) Magnetic composite particles for decontamination AF3 were obtained by a method similar to Example 154 except that a process c9 was applied instead of the process c7. [Process c9] The process was carried out in a similar manner to the process c3 except that the amount of coated magnetic nanoparticles to be added (at each stage) was one-tenth (1 mL in total) of that of the process c3.

(Example 157) Magnetic composite particles for decontamination AF4 were obtained by the method of Example 154 except that a process c10 was applied instead of the process c7. [Process c10] The process was carried out in a similar manner to the process c4 except that the amount of coated magnetic nanoparticles to be added (at each stage) was one-tenth (1 mL in total) of that of the process c4.

(Example 158) Magnetic composite particles for decontamination AF5 were obtained in a similar manner to Example 154 except that a process c11 was applied instead of the process c7. [Process c11] The process was carried out in a similar manner to the process c5 except that the amount of coated magnetic nanoparticles to be added (at each stage) was one-tenth (1 mL in total) of that of the process c5.

(Example 159) Magnetic composite particles for decontamination AF6 were obtained in a similar manner to Example 154 except that a process c12 was applied instead of the process c7. [Process c12] The process was carried out in a similar manner to the process c6 except that the amount of coated magnetic nanoparticles to be added (at each stage) was one-tenth (1 mL in total) of that of the process c6.

(Example 160) Magnetic composite particles for decontamination AG1 were obtained in a similar manner to Example 154 except that the following process was applied instead of the process b13. [Process b14] Distilled water was added to 4 g of chitosan nanofiber (10% concentration, manufactured by SUGINO MACHINE LIMITED) to give a total amount of 40 mL and was sufficiently dispersed.

(Examples 161 to 165) Magnetic composite particles for decontamination AG2 to AG6 were obtained in a similar manner to the Examples 155 to 159, respectively, except that the process b14 was used instead of the process b13 in each of Examples 155 to 159.

(Example 166) Magnetic composite particles for decontamination AH1 were obtained in a similar manner to Example 154 except that the following process was applied instead of the process b13. [Process b15] Distilled water was added to 4 g of hydroxyapatite (nano-SHAp (grain size of 40 nm), manufactured by SofSera Corporation) to give a total amount of 40 mL and was sufficiently dispersed.

(Examples 167 to 171) Magnetic composite particles for decontamination AH2 to AH6 were obtained in a similar manner to the Examples 155 to 159, respectively, except that the process b15 was used instead of the process b13 in each of Examples 155 to 159.

(Examples 172 to 189) Magnetic composite particles for decontamination were obtained in a similar manner to Examples 154 to 171 except that the process a2 was applied instead of the process a1. Assume that the magnetic composite particles for decontamination of Examples 172 to 189 respectively correspond to the processes of Examples 154 to 171.
Examples 172 to 177: Magnetic composite particles for decontamination AI1 to AI6
Examples 178 to 183: Magnetic composite particles for decontamination AJ1 to AJ6
Examples 184 to 189: Magnetic composite particles for decontamination AK1 to AK6

(Examples 190 to 195) Magnetic composite particles for decontamination were obtained in a similar manner to Examples 166 to 171 except that the process a3 was applied instead of the process a1. Assume that the magnetic composite particles for decontamination of Examples 190 to 195 respectively correspond to the processes of Examples 166 to 171. Examples 190 to 195: Magnetic composite particles for decontamination AL1 to AL6 [Process a3 (synthesis of coated magnetic nanoparticles)] A tube having a capacity of 50 mL was prepared and 1.4 g of iron oxide magnetic powder was dispersed in 20 mL of distilled water. Next, distilled water was added to give a total amount of 43.5 mL. The mixture was dispersed for 10 minutes by the bathtub-type ultrasonic disintegrator. Further, 1.5 mL of stock solution of PSS (poly(sodium 4-styrene sulfonate: stock solution (form for sale), Typical MW 200,000) were added. This liquid mixture was mixed for two hours while the inversion was repeatedly performed. Then, centrifugal separation was carried out at 3000 G for 10 minutes by using a bucket centrifuge. After the centrifugal separation, the supernatant was removed and 20 mL of distilled water was added and completely dispersed. After that, 25 mL of distilled water was added and mixed. Next, centrifugal separation was carried out at 18,000 G for 15 minutes by using an ultracentrifuge, and the supernatant was removed. After that, distilled water was added to give a total amount of 14 mL and was completely dispersed, and was then subjected to argon gas replacement.

(Examples 196 to 201) Magnetic composite particles for decontamination were obtained in a similar manner to Examples 166 to 171 except that the process a4 was applied instead of the process a1. Assume that the magnetic composite particles for decontamination of Examples 196 to 201 respectively correspond to the processes of Examples 166 to 171. Examples 196 to 201: Magnetic composite particles for decontamination AM1 to AM6 [Process a4] A tube having a capacity of 50 mL was prepared and 1.4 g of α-iron powder having an oxide layer were dispersed in 37.4 mL of distilled water. The other processes were similar to the process a3.

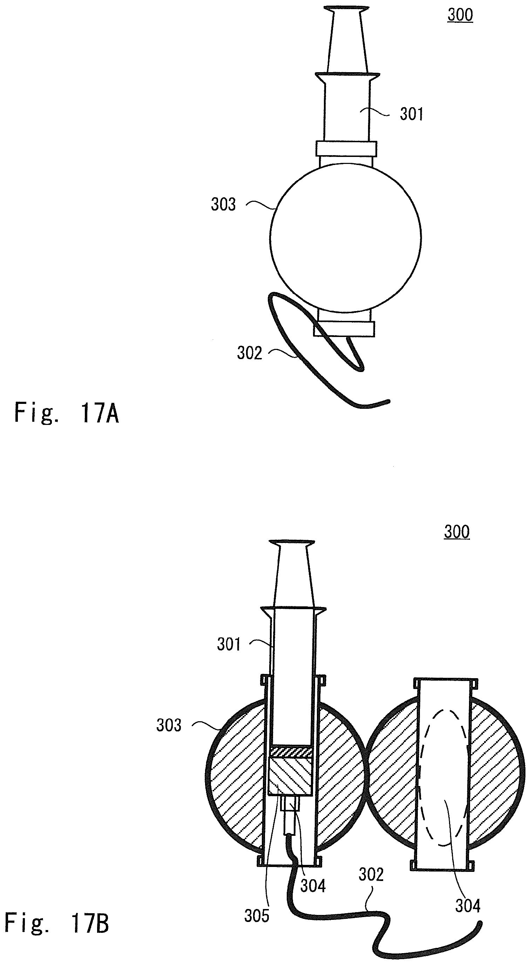

(Example 202) An experiment for confirming the removal rate of radioactive cesium from radioactive cesium contaminated water was conducted by adding 1.8 mL of dispersions of the magnetic composite particles for decontamination M3 according to Example 48 to 90 mL of radioactive cesium-contaminated water. Specifically, prior to the injection of the radioactive cesium-contaminated water and the magnetic composite particles for decontamination M3, and after five minutes from the injection, the liquid mixture was allowed to pass through the magnet filter/syringe (see Non Patent Literature 9) shown in Fig. 17A, to thereby magnetically remove magnetic composite particles for decontamination having adsorbed radioactive cesium.

Fig. 17B shows a sectional view of a cut portion of a magnet filter 300. The magnet filter/syringe 300 includes a 30 mL syringe 301 (manufactured by TERUMO CORPORATION), a tube 302, a magnetic circuit (ball-like yoke 303, neodymium magnet 304), and SUS434 stainless wool 305. The inside of the magnetic circuit 303 is filled with 6 g of the SUS434 stainless wool 305. The radiation dose in the container containing filtrate water was measured by a latest-model gamma-ray spectrometer LB2045 mounted with a high-precision NaI scintillation detector, through an 18-gauge needle mounted on the magnet filter/syringe 300. As a result, it was confirmed that the radiation dose of cesium 134 contained in the radioactive cesium-contaminated water was 109.3 becquerel/kg prior to the injection of the magnetic composite particle for decontamination M3, whereas the radiation dose was reduced to a detection limit (0 becquerel/kg) after the treatment using the magnetic composite particles for decontamination M3.

(Examples 203 to 205) Magnetic composite particles for decontamination were prepared by the method of Example 12 (in this case, however, the amount of dispersions of trapping compounds used was changed from 40 mL to 30 mL) using the coated magnetic nanoparticles of Example 10 and the following three types of trapping compounds. (Trapping compound used in Example 203) 16 mL of aqueous solution (0.49 mol/L) containing copper sulfate pentahydrate were added to 16 mL of distilled water and were mixed. After that, 8 mL of aqueous solution (0.5 mol/L) containing potassium ferrocyanide trihydrate were added and mixed, thereby obtaining dispersions of copper ferrocyanide. (Trapping compound used in Example 204) 18 mL of aqueous solution (0.49 mol/L) containing nickel sulfate hexahydrate were added to 20 mL of distilled water and were mixed. After that, 12 mL of aqueous solution (0.5 mol/L) containing potassium ferrocyanide trihydrate were added and mixed, thereby obtaining dispersions of nickel ferrocyanide. (Trapping compound used in Example 205) 12 mL of aqueous solution (0.49 mol/L) containing cobalt sulfate heptahydrate were added to 16 mL of distilled water and were mixed. After that, 12 mL of aqueous solution (0.5 mol/L) containing potassium ferrocyanide trihydrate were added and mixed, thereby obtaining dispersions of nickel ferrocyanide.

An alkaline aqueous solution having a final cesium concentration of 10 ppm was prepared by adding calcium hydroxide to a cesium chloride aqueous solution to reach pH 12. Next, 10 µL of the magnetic composite particles for decontamination obtained in Examples 203 to 205 were added to 3 mL of alkaline aqueous solution to confirm the cesium removal ability.

As a result, the magnetic composite particles for decontamination of Examples 203 to 205 have a cesium removal ability of 95% or more in the alkaline aqueous solution of pH 12. Accordingly, it was confirmed that the magnetic composite particles for decontamination have a high cesium removal ability also in the strongly alkaline environment.

### Industrial Applicability

Magnetic composite particles for decontamination according to the present invention are suitably used for a radioactive substance family decontamination system and a radioactive substance family decontamination method for removing a radioactive substance family mixed in a liquid. Radioactive isotopes and stable isotopes, which have the same physico-chemical properties and the same behavior in an environment as described above, can be suitably used for decontamination of non-radioactive substances. As described above, the magnetic composite particles for decontamination according to the present invention can be widely used for decontamination of the radioactive substance family dispersed in a liquid such as naturally-derived liquid such as seawater, tissue-derived liquid such as blood serum, and liquid in the food field such as drinking water, and in the fields of purified water, reclaimed water, sewage, sludge, and various types of washing water. The magnetic composite particles for decontamination according to the present invention have an ability to trap the radioactive substance family. Accordingly, the magnetic composite particles for decontamination can be used not only for liquid, but also for decontamination of the radioactive substance family contained in gas, fluid, and the like. The present invention can be used not only for decontamination, but also for application to the medical field and application by condensation.

This application is based upon and claims the benefit of priority from Japanese patent application No. 2011-101174, filed on April 28, 2011, Japanese patent application No. 2011-227470, filed on October 14, 2011, and Japanese patent application No. 2012-044995, filed on March 1, 2012.

### Reference Signs List

1: MAGNETIC COMPOSITE PARTICLE FOR DECONTAMINATION, 10: MAGNETIC NANOPARTICLE, 12: MAGNETIC BASKET-LIKE SKELETON, 13: HOLLOW STRUCTURE, 14: VOID, 15: COVER LAYER, 18: TRAPPING COMPOUND, 20: RADIATION-CONTAMINATED WATER, 21: RADIOACTIVE CESIUM (RADIOACTIVE SUBSTANCE FAMILY), 30: MAGNETIC ACCUMULATION MEANS, 31: MAGNET, 32: SHIELDING MEANS, 33: CASING, 40: SENSOR, 41: MAGNETIC FILTER, 42: MAGNETIC CONTROL UNIT, 43: PURIFICATION TUBE, 44: SUPPORT PORTION, 45: MAGNETIC WIRE MESH, 46: VOID PORTION, 47: JOINT PORTION, 48: SUPERSONIC RADIATION MEANS, 50: TRAPPING/COLLECTING DEVICE, 51: SYRINGE, 52: MAGNETIC FILTER, 53: NEODYMIUM MAGNET, 54: TEST TUBE, 90: CLUSTER, 91: COATED MAGNETIC NANOPARTICLE

## Claims

1. A radioactive substance decontamination system comprising:
a magnetic composite particle for decontamination (1) adapted to trap a radioactive substance (21) in a liquid (20); and
magnetic accumulation means (30) for accumulating the magnetic composite particle for decontamination (1) in the liquid (20),
wherein the magnetic composite particle for decontamination (1) has a multilayer structure including: a magnetic particle (10) formed in a core portion; a trapping compound (18) formed in a surface layer to trap the radioactive substance (21) in the liquid (20); and an intermediate layer (15) that directly covers the magnetic particle (10) and is formed substantially between the magnetic particle (10) and the trapping compound (18), **characterised in that** the trapping compound and the intermediate layer are bonded together by an electrostatic bond, and wherein the magnetic particle (10) has an average grain size of 1 nm to 10 mm.

2. The radioactive substance decontamination system according to Claim 1, wherein the magnetic accumulation means (30) includes a structure that enables ON-OFF control of a magnetic force, accumulates the radioactive substance (21) contained in the liquid (20) by the magnetic force of the magnetic accumulation means (30), and separates the radioactive substance (21) from the magnetic accumulation means (30) after the accumulation.

3. The radioactive substance decontamination system according to Claim 1 or 2, wherein the radioactive substance (21) is at least one of radioactive caesium, radioactive strontium, and radioactive thallium.

4. The radioactive substance decontamination system according to any one of Claims 1 to 3, wherein a coated magnetic particle including the magnetic particle (10) and the intermediate layer (15), and the trapping compound (18) are separately injected into the liquid to form the magnetic composite particle for decontamination (1) in the liquid (20).

5. The radioactive substance decontamination system according to any one of Claims 1 to 4, wherein the magnetic accumulation means (30) includes a magnetic filter (41) that enables ON-OFF control of a magnetic force, filters a liquid (20) containing the radioactive substance (21), and traps the radioactive substance (21).

6. The radioactive substance family decontamination system according to any one of claims 1 to 5, wherein the intermediate layer (15) is formed of at least one of lipid, detergent, polymer, and inorganic substance.

7. The radioactive substance decontamination system according to any one of claims 1 to 6, wherein the magnetic particle forms a cluster (90).

8. The radioactive substance decontamination system according to any one of claims 1 to 7, wherein the magnetic particle (10) contains at least partially one of Fe, Co, Ni, manganese, gadolinium, and an oxide thereof.

9. The radioactive substance decontamination system according to any one of claims 1 to 8, wherein the trapping compound (18) is selected from the group consisting of metal ferrocyanide, zeolite, ion exchanger, nanoporous material, and hydroxyapatite.

10. The radioactive substance decontamination system according to any one of claims 1 to 9, wherein the magnetic particle (10) forms a basket-shaped skeleton (12) having a hollow (13) formed therein.

11. The radioactive substance decontamination system according to any one of claims 1 to 10, wherein the trapping compound (18) is selected from the group consisting of ferric ferrocyanide, nickel ferrocyanide, cobalt ferrocyanide, copper ferrocyanide, zinc ferrocyanide, chromium ferrocyanide, and manganese ferrocyanide.

12. A method for fabricating a magnetic composite particle for decontamination (1) having a multilayer structure including: a magnetic particle (10), a trapping compound (18) adapted to trap a radioactive substance (21) in a liquid, and an intermediate layer (15); the method comprising the steps of:
forming a coated magnetic particle (91) obtained by reacting the magnetic particle (10) with an intermediate layer forming compound for forming the intermediate layer (15) that directly covers at least a part of a surface layer of the magnetic particle (10) and is formed substantially between the magnetic particle (10) and the trapping compound (18); and introducing the trapping compound into the coated magnetic particle (91) so as to be disposed in at least a part of the surface layer, **characterised in that** the trapping compound and the intermediate layer are bonded together by an electrostatic bond, and wherein the magnetic particle (10) has an average grain size of 1 nm to 10 mm.

13. The method for fabricating a magnetic composite particle for decontamination (1) according to Claim 12,
wherein the step of introducing the trapping compound (18) is obtained by mixing and stirring, in dispersions, the coated magnetic particle (91) and the trapping compound (18).

14. The method for fabricating a magnetic composite particle for decontamination (1) according to Claim 12 or 13, wherein the step of introducing the trapping compound (18) includes at least one of the steps of: (i) mixing and stirring dispersions of one of the trapping compound (18) and the coated magnetic particle (91), and adding and mixing the other of the trapping compound (18) and the coated magnetic particle (91) into the dispersions; and (ii) mixing and stirring dispersions including the trapping compound (18) and the coated magnetic particle (91) by transferring the dispersions between a plurality of containers under positive pressure or negative pressure.

15. The method for fabricating a magnetic composite particle for decontamination (1) according to any one of Claims 12 to 14,
wherein the step of forming the coated magnetic particle (91) includes a step of mixing and stirring, in dispersions, the magnetic particle (10) and an intermediate layer forming compound for forming the intermediate layer (15).

## Patentansprüche

1. Ein System zur Dekontamination radioaktiver Stoffe umfassend:
ein magnetisches Kompositteilchen zur Dekontamination (1) angepasst um radioaktive Stoffe in einer Flüssigkeit einzufangen (21); und magnetische Anreicherungsträger (30) zur Anreicherung der magnetischen Kompositteilchen zur Dekontamination (1) in der Flüssigkeit (20),
wobei das magnetische Kompositteilchen zur Dekontamination (1) eine mehrschichtige Struktur hat einschließlich: ein, in einem inneren Kernbereich gebildetes magnetisches Teilchen (10); eine, in einer Oberflächenschicht gebildete Einfangverbindung (18) zum Einfangen des radioaktiven Stoffes (21) in der Flüssigkeit (20); und eine Zwischenschicht (15), die das magnetische Teilchen (10) direkt ummantelt und im Wesentlichen zwischen dem magnetischen Teilchen (10) und der Einfangverbindung (18) gebildet wird,
**gekennzeichnet dadurch, dass**
die Einfangverbindung und die Zwischenschicht durch elektrostatische Bindungen miteinander verbunden sind, und wobei das magnetische Teichen (10) eine durchschnittliche Teilchengröße von 1 nm bis 10 mm hat.

2. Das System zur Dekontamination radioaktiver Stoffe gemäß Anspruch 1, wobei der magnetische Anreicherungsträger (30) eine Struktur beinhaltet, die die ON-OFF Kontrolle einer magnetischen Kraft ermöglicht, die den radioaktiven Stoff (21), der in der Flüssigkeit (20) enthalten ist, durch die magnetische Kraft des magnetischen Anreicherungsträgers (30) anreichert, und die den radioaktiven Stoff (21) von dem magnetischen Anreichungsträger (30) nach der Anreicherung trennt.

3. Das System zur Dekontamination radioaktiver Stoffe gemäß Anspruch 1 oder 2, wobei der radioaktive Stoff (21) mindestens einer aus der Gruppe von radioaktivem Caesium, radioaktivem Strontium, und radioaktivem Thallium ist.

4. Das System zur Dekontamination radioaktiver Stoffe gemäß einem der Ansprüche 1 bis 3, wobei ein ummanteltes magnetisches Teilchen, mitsamt dem magnetischen Teilchen (10) und der Zwischenschicht (15), und die Auffangverbindung (18), getrennt in die Flüssigkeit injiziert werden um das magnetische Kompositteilchen zur Dekontamination (1) in der Flüssigkeit (20) zu bilden.

5. Das System zur Dekontamination radioaktiver Stoffe gemäß einem der Ansprüche 1 bis 4, wobei der magnetische Anreicherungsträger (30) einen magnetischen Filter (41) beinhaltet, der die ON-OFF Kontrolle einer magnetischen Kraft ermöglicht, der die Flüssigkeit (20), die den radioaktiven Stoff (21) enthält, filtert, und den radioaktiven Stoff (21) einfängt.

6. Das System zur Dekontamination radioaktiver Stoffe gemäß einem der Ansprüche 1 bis 5, wobei die Zwischenschicht (15) aus mindestens einem aus der Gruppe von Lipiden, Reinigungsmitteln, Polymeren, und anorganischen Stoffen gebildet ist.

7. Das System zur Dekontamination radioaktiver Stoffe gemäß einem der Ansprüche 1 bis 6, wobei das magnetische Teilchen einen Cluster (90) bildet.

8. Das System zur Dekontamination radioaktiver Stoffe gemäß einem der Ansprüche 1 bis 7, wobei das magnetische Teilchen (10) mindestens teilweise eines der Elemente Fe, Co, NI, Mangan, Gadolinium und ein Oxid davon, enthält.

9. Das System zur Dekontamination radioaktiver Stoffe gemäß einem der Ansprüche 1 bis 8, wobei die Einfangverbindung (18) aus der Gruppe bestehend aus Metallzyanoferrat, Zeolith, Ionenaustauscher, Nanoporösem Material, und Hydroxylapatit gewählt ist.

10. Das System zur Dekontamination radioaktiver Stoffe gemäß einem der Ansprüche 1 bis 9, wobei das magnetische Teilchen (10) ein Korb-förmiges Gerüst (12) bildet, worin sich ein Hohlraum (13) gebildet hat.

11. Das System zur Dekontamination radioaktiver Stoffe gemäß einem der Ansprüche 1 bis 10, wobei die Auffangverbindung (18) aus der Gruppe gewählt ist, bestehend aus Ferriferrozyanit, Nickel Cyanoferrat, Kobaldt Cyanoferrat, Kufper Cyanoferrat, Zink Cyanoferrat, Chrom-Cyanoferrat, und Mangan-Cyanoferrat.

12. Ein Verfahren zur Herstellung eines magnetischen Kompositteilchens zur Dekontamination (1), das eine mehrschichtige Struktur besitzt einschließlich: einem magnetischen Teilchen (10), einer Einfangverbindung (18) angepasst zum Einfangen eines radioaktiven Stoffes (21) in einer Flüssigkeit, und eine Zwischenschicht (15);
das Verfahren umfassend der Schritte:
Formation eines ummantelten magnetischen Teilchens (91) entstanden durch die Reaktion des magnetischen Teilchens (10) mit einer Zwischenschicht-bildenden Verbindung zu Bildung der Zwischenschicht (15), die direkt, zumindest einen Teil einer Oberflächenschicht des magnetischen Teilchens (10) und der Einfangverbindung (18) umhüllt; und die die Einfangverbindung in das ummantelte magnetische Teilchen einbringt, so dass sie zumindest teilweise auf der Oberflächenschicht angeordnet ist, **gekennzeichnet dadurch, dass** die Einfangverbindung und die Zwischenschicht durch elektrostatische Bindungen miteinander verbunden sind, und wobei das magnetische Teichelchen (10) eine durchschnittliche Teilchengröße von 1 nm bis 10 mm hat.

13. Das Verfahren zur Herstellung eines magnetischen Kompositteilchens zur Dekontamination gemäß Anspruch 12, wobei der Schritt des Einbringens der Einfangverbindung (18) durch das Mischen und Rühren des ummantelten magnetischen Teilchens (91) und der Einfangverbindung (18) in Dispersionen erreicht wird.

14. Das Verfahren zur Herstellung eines magnetischen Kompositteilchens zur Dekontamination gemäß Anspruch 12 oder 13, wobei der Schritt des Einbringens der Einfangverbindung (18) zumindest einen der Schritte beinhaltet:
(i) Mischen und Rühren von Dispersionen aus einem der Einfangverbindungen (18) und dem ummantelten magnetischen Teilchen (91), und Zugabe und Mischen der anderen der Einfangverbindungen (18) und des ummantelten magnetischen Teilchens (91) in die Dispersionen; und
(ii) Mischen und Rühren von Dispersionen einschließlich der Einfangverbindung (18) und des ummantelten magnetischen Teilchens (91) durch Transferieren der Dispersionen zwischen einer Vielzahl von Behältern unter positivem Druck oder negativem Druck.

15. Das Verfahren zur Herstellung eines magnetischen Kompositteilchens zur Dekontamination gemäß einem der Ansprüche 12 bis 14, wobei der Schritt der Formation des ummantelten magnetischen Teilchens (91) einen Schritt des Mischens und Rührens des magnetischen Teilchens (10) und einer Zwischenschicht-formenden Verbindung in Dispersionen, zur Bildung einer Zwischenschicht (15) einschließt.

## Revendications

1. Un système de décontamination de substances radioactives comprenant :
une particule magnétique composite pour la décontamination (1) adaptée pour piéger une substance radioactive (21) dans un liquide (20) ; et
un moyen d'accumulation magnétique (30) pour accumuler les particules magnétiques composites pour la décontamination (1) dans le liquide (20),
dans lequel la particule magnétique composite pour la décontamination (1) a une structure multicouche comprenant : une particule magnétique (10) formée dans une partie centrale ; un composé piégeant (18) en forme de couche de surface pour piéger la substance radioactive (21) dans le liquide (21) ; et une couche intermédiaire (15) qui couvre directement la particule magnétique (10) et est essentiellement formée entre la particule magnétique (10) et le composé piégeant (18),
**caractérise en ce que** le composé piégeant et la couche intermédiaire sont liés l'un à l'autre par un lien électrostatique, et dans lequel la particule magnétique (10) a une taille de grain moyenne de 1 nm à 10 mm.

2. Le système de décontamination de substances radioactives selon la revendication 1, dans lequel le moyen d'accumulation magnétique (30) comprend une structure qui permet le control ON-OFF de la force magnétique, accumule la substance radioactive (21) contenue dans le liquide (20) par la force magnétique du moyen d'accumulation magnétique (30), et sépare la substance radioactive (21) du moyen d'accumulation magnétique (30) après l'accumulation.

3. Le système de décontamination de substances radioactives selon l'une quelconque des revendications 1 ou 2, dans lequel la substance radioactive (21) est ou moins l'un de césium radioactif, strontium radioactif, et thallium radioactif.

4. Le système de décontamination de substances radioactives selon l'une quelconque des revendications 1 à 3, dans lequel une particule magnétique enrobée comprenant la particule magnétique (10) et la couche intermédiaire (15), ainsi que le composé piégeant (18) sont injectés séparément dans le liquide pour former la particule magnétique composite pour la décontamination (1) dans le liquide (20).

5. Le système de décontamination de substances radioactives selon l'une quelconque des revendications 1 à 4, dans lequel le moyen d'accumulation magnétique (30) comprend un filtre magnétique (41) qui permet le control ON-OFF de la force magnétique, filtre un liquide (21) qui contient la substance radioactive (21), et piège la substance radioactive (21).

6. Le système de décontamination de substances radioactives selon l'une quelconque des revendications 1 à 5, dans lequel la couche intermédiaire (15) est formée d'un moins un de lipide, détergent, polymère et substance inorganique.

7. Le système de décontamination de substances radioactives selon l'une quelconque des revendications 1 à 6, dans lequel la particule magnétique forme un cluster (90).

8. Le système de décontamination de substances radioactives selon l'une quelconque des revendications 1 à 7, dans lequel la particule magnétique (10) contient au moins partiellement l'un de Fe, Co, Ni, manganèse, gadolinium, et leurs oxydes.

9. Le système de décontamination de substances radioactives selon l'une quelconque des revendications 1 à 8, dans lequel le composé piégeant (18) est choisi du groupe consistant en métal ferrocyanure, zéolite, échangeur d'ions, matériau nanoporeux et hydroxyapatite.

10. Le système de décontamination de substances radioactives selon l'une quelconque des revendications 1 à 9, dans lequel la particule magnétique (10) forme un squelette en forme de panier (12) ayant une cavité (13).

11. Le système de décontamination de substances radioactives selon l'une quelconque des revendications 1 à 10, dans lequel le composé piégeant (18) est choisi du groupe consistant en ferrocyanure ferrique, ferrocyanure de nickel, ferrocyanure de cobalt, ferrocyanure de cuivre, ferrocyanure the zinc, ferrocyanure the chrome, et ferrocyanure the manganèse.

12. Un procédé pour fabriquer une particule magnétique composite pour la décontamination (1) ayant une structure multicouche comprenant; une particule magnétique (10), un composé piégeant (18) adapté pour piéger une substance radioactive (21) dans un liquide, et une couche intermédiaire (15) ; le procédé comprenant les étapes de :
former une particule magnétique enrobée (91) obtenue par réaction de la particule magnétique (10) avec un composé de formation de couche intermédiaire pour former la couche intermédiaire (15) qui couvre directement au moins une partie d'une couche de surface de la particule magnétique (10) et est formée essentiellement entre la particule magnétique (10) et le composé piégeant (18) ; et introduire le composé piégeant dans la particule magnétique enrobée (91) de façon à être disposée dans au moins une partie de la couche de surface, **caractérisé en ce que** le composé piégeant et la couche intermédiaire sont liés l'un à l'autre par un lien électrostatique, et dans lequel la particule magnétique (10) a une taille de grain moyenne de 1 nm à 10 mm.

13. Le procédé de fabrication d'une particule magnétique composite pour la décontamination (1) selon la revendication 12, dans lequel l'étape de l'introduction du composé piégeant (18) est obtenue en mélangeant et en agitant, dans des dispersions, la particule magnétique enrobée (91) et le composé piégeant (18).

14. Le procédé de fabrication d'une particule magnétique composite pour la décontamination (1) selon la revendication 12 ou 13, dans lequel l'étape de l'introduction du composé piégeant (18) comprend au moins l'une des étapes de : (i) mélanger et agiter des dispersions de l'un du composé piégeant (19) et de la particule magnétique enrobée (91), et ajouter et mélanger l'autre du composé piégeant (18) et de la particule magnétique enrobée (91) dans les dispersions; et (ii) mélanger et agiter les dispersions comprenant le composé piégeant (18) et la particule magnétique enrobée (91) en transférant les dispersions entre une pluralité de containers sous pression positive ou pression négative.

15. Le procédé de fabrication d'une particule magnétique composite pour la décontamination (1) selon l'une quelconque des revendication 12 à 14, dans lequel l'étape de formation de la particule magnétique enrobée (91) comprend une étape de mélanger et agiter, dans des dispersions, la particule magnétique (10) et un composé de formation de couche intermédiaire pour former la couche intermédiaire (15).
